(19) Europäisches Patentamt
European Patent Office
Office européen des brevets

(11) **EP 2 738 633 A1**

(12) **EUROPEAN PATENT APPLICATION**
published in accordance with Art. 153(4) EPC

(43) Date of publication:
**04.06.2014 Bulletin 2014/23**

(51) Int Cl.:
***G05B 19/4103*** *(2006.01)*      ***G05B 19/18*** *(2006.01)*

(21) Application number: **12819293.7**

(86) International application number:
**PCT/JP2012/004801**

(22) Date of filing: **27.07.2012**

(87) International publication number:
**WO 2013/018339 (07.02.2013 Gazette 2013/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2011   JP 2011167229**

(71) Applicant: **Shin Nippon Koki Co., Ltd.**
**Osaka-shi**
**Osaka 541-0057 (JP)**

(72) Inventor: **Nishibashi, Nobutaka**
**Osaka-shi**
**Osaka 541-0057 (JP)**

(74) Representative: **Müller-Boré & Partner**
**Patentanwälte PartG mbB**
**Friedenheimer Brücke 21**
**80639 München (DE)**

(54) **NUMERICAL CONTROL DEVICE**

(57)      A numerical control device includes a pulse interpolation unit which obtains a position coordinate on respective transfer axes at each time point at every unit time of a reference time, the position coordinate corresponding to a position coordinate of a post-interpolation tool path in a workpiece coordinate system at each time point, and a transfer amount per unit time for the transfer axes from the obtained position coordinate on each transfer axis at each time point, and which sets the obtained transfer amount per unit time as a command pulse per specific period. The pulse interpolation unit obtains an intervening variable at each time point based on an intervening variable time function, obtains a position coordinate of a post-interpolation tool path in the workpiece coordinate system and a position coordinate of a post-interpolation second transfer axis path on a second transfer axis which correspond to the obtained intervening variable at each time point, and obtains a position coordinate on each transfer axis corresponding to the position coordinate of the post-interpolation tool path in the workpiece coordinate system at each time point based on a specific relational expression using the obtained position coordinate on the second transfer axis as a constraint and representing a correlation between a position coordinate of a tool in the workpiece coordinate system and a position coordinate on each transfer axis.

FIG.2

**Description**

Technical Field

The present invention relates to a numerical control device.

Background Art

Conventionally, various machine tools are used to machine a workpiece by numerically controlling, according to a machining program (NC program), a transfer device that transfers a workpiece and a tool for machining the workpiece that serve as transfer objects. Patent Document 1 described below discloses a numerical control device that performs numerical control of such a transfer device.

The numerical control device described in Patent Document 1 controls operations of respective transfer devices by obtaining, from a machining program, a tool path expressing a variation in position coordinates of a tool in a workpiece coordinate system fixed on a workpiece as a function of an intervening variable, obtaining a transfer axis path for each transfer axis of the transfer devices from the tool path, obtaining a transfer amount of a transfer object on each transfer axis per reference unit time based on the transfer axis path obtained for each transfer axis, and outputting data of the obtained transfer amount as a command pulse to servomotors of the transfer devices corresponding to the respective transfer axes. In addition, the numerical control device performs block smooth interpolation and corner smooth interpolation on a transfer axis path and obtains the transfer amount on each transfer axis per reference unit time based on the transfer axis path after the smooth interpolations by pulse interpolation. In this case, the block smooth interpolation interpolates a transfer axis path with a shape that connects a large number of command points with a straight line into a smooth curve that passes through the respective command points, and the corner smooth interpolation interpolates a corner section of a transfer axis path in which variations in position coordinates suddenly differ between before and after a prescribed command point so that the corner section becomes a smooth corner. In addition, with this numerical control device, smooth interpolation of each transfer axis path is performed so that a movement of a transfer object in accordance with the transfer axis path becomes smooth, and a transfer amount of the transfer object on each transfer axis per reference unit time is obtained by pulse interpolation based on the transfer axis path after the smooth interpolation.

Furthermore, Patent Document 1 discloses a machine tool including two transfer devices having transfer axes for transferring a transfer object which are parallel to each other among a plurality of transfer devices. With this machine tool, coordinates of transfer axes that are parallel to one another are not uniquely fixed and are indeterminate with respect to a position coordinate indicated by a tool path. Therefore, Patent Document 1 adopts a configuration in which when obtaining each transfer axis path from a tool path using a kinematic relational expression, all transfer axis paths corresponding to the tool path can be derived by adding some kind of constraint that specifies a relationship between the parallel transfer axes. According to this technique, even if there are transfer axes parallel to one another, simultaneous control of transfer devices for all transfer axes can be achieved. In addition, Patent Document 1 adopts a configuration in which an upper limit value of a combined velocity of velocities in all transfer axis directions is obtained so that an acceleration of the transfer object on each transfer axis does not exceed an allowable acceleration for the transfer axis, and the transfer devices are controlled so that an actual combined velocity does not exceed the obtained upper limit value.

However, with the technique described above, there is a risk that a machining velocity and a machining accuracy of a workpiece may decline in a machine tool which has a plurality of transfer axes that are indeterminate with respect to a position coordinate indicated by a tool path and in which an acceleration performance of a transfer object with respect to any of the indeterminate transfer axes is significantly poor. The reason for this is as follows.

When the acceleration performance of a transfer object with respect to any of the indeterminate transfer axes is significantly poor, an allowable acceleration for the transfer axis must be set to a significantly low value and, accordingly, a combined velocity of velocities in all transfer axis directions at each time point must be limited to a low velocity in accordance with the low allowable acceleration of the transfer axis. As a result, a machining velocity of a workpiece in the machine tool declines.

In addition, when smooth interpolation of a transfer axis path is performed, a positional error is created with respect to the transfer axis path. However, since each transfer axis that is indeterminate with respect to the position coordinate indicated by a tool path commonly includes a specific coordinate axis component of a workpiece coordinate system, the positional error created by the smooth interpolation on the transfer axis path for each indeterminate transfer axis acts in superposition on the specific coordinate axis. As a result, there is a risk that an error on the coordinate axis may increase and a machining accuracy of a workpiece in the machine tool may decline.

Patent Document 1: Japanese Patent Application Laid-open No. 2008-225825

Summary of the Invention

An object of the present invention is to enable a machine tool which has a plurality of transfer axes that are indeterminate with respect to a position coordinate indicated by a tool path and in which an acceleration performance of a transfer object with respect to any of the indeterminate transfer axes is significantly poor to perform machining of workpieces at high velocity and with high machining accuracy while performing simultaneous control of transfer devices for all transfer axes.

A numerical control device according to an aspect of the present invention is a numerical control device provided in a machine tool including a plurality of transfer devices which move a transfer object which is a workpiece or a tool for machining the workpiece along a plurality of transfer axes in order to machine the workpiece, the plurality of transfer axes including a first transfer axis and a second transfer axis which respectively include a specific coordinate axis component in a workpiece coordinate system set on the workpiece and which are indeterminate axes whose coordinates are not uniquely determined with respect to a coordinate on the specific coordinate axis, the plurality of transfer devices including a first transfer device which moves the transfer object along the first transfer axis and a second transfer device which moves the transfer object along the second transfer axis, an allowable acceleration of transfer of the transfer object along the second transfer axis by the second transfer device being lower than an allowable acceleration of transfer of the transfer object along the first transfer axis by the first transfer device, and the numerical control device numerically controlling the respective transfer devices by outputting a command pulse per specific period to the respective transfer devices, the numerical control device comprising: a storage unit which stores a machining program which instructs machining of the workpiece; a path derivation unit which reads the machining program stored in the storage unit, and which obtains a tool path and a second transfer axis path based on the machining program which has been read, the tool path including a function which expresses a movement of the tool during machining of the workpiece by a position coordinate of the tool in the workpiece coordinate system and an intervening variable which is an integrated length of a locus of the movement of the tool, the second transfer axis path expressing a movement of a specific point on the second transfer axis as a function of a position coordinate of the specific point on the second transfer axis and the intervening variable, the specific point being to be used as a reference when the second transfer device moves the transfer object during machining of the workpiece; a tool path interpolation unit which interpolates the tool path obtained by the path derivation unit so that a movement of the tool expressed by the tool path becomes smooth; a second transfer axis path interpolation unit which performs smooth interpolation and local interpolation, the smooth interpolation being an interpolation in which the second transfer axis path obtained by the path derivation unit is interpolated so that a movement of the specific point on the second transfer axis becomes smooth, the movement of the specific point being expressed by the second transfer axis path, the local interpolation being an interpolation in which the second transfer axis path after the smooth interpolation is interpolated so that a secondary differential value with respect to the intervening variable of the second transfer axis path after smooth interpolation becomes smaller; an intervening variable time function derivation unit which obtains an intervening variable time function expressing a variation in the intervening variable with respect to a lapse of a reference time, based on an acceleration/deceleration condition including an allowable acceleration of transfer of the transfer object for each transfer axis when the transfer object is moved along each transfer axis, a post-interpolation tool path which is the tool path after being interpolated by the tool path interpolation unit, and a post-interpolation second transfer axis path which is the second transfer axis path after being locally interpolated by the second transfer axis path interpolation unit; a pulse interpolation unit which obtains a position coordinate on each of the transfer axes at each time point at every unit time of the reference time, the position coordinate corresponding to a position coordinate of the post-interpolation tool path in the workpiece coordinate system at each time point, and a transfer amount of the transfer object per unit time for each transfer axis from the obtained position coordinate on each transfer axis at each time point, and which sets the obtained transfer amount per unit time as the command pulse per the specific period; and a control unit which outputs, to each transfer device, the command pulse for the transfer axis corresponding to that transfer device among the command pulses per the specific period for the respective transfer axes obtained by the pulse interpolation unit, and which causes each transfer device to move the transfer object in accordance with the command pulse outputted to each transfer device: wherein the pulse interpolation unit obtains the intervening variable at each time point at every unit time of the reference time based on the intervening variable time function obtained by the intervening variable time function derivation unit; the pulse interpolation unit obtains a position coordinate of the post-interpolation tool path in the workpiece coordinate system and a position coordinate of the post-interpolation second transfer axis path on the second transfer axis, the position coordinate of the post-interpolation tool path corresponding to the obtained intervening variable at each time point, the position coordinate of the post-interpolation second transfer axis path corresponding to the intervening variable at each time point; and the pulse interpolation unit obtains a position coordinate on each transfer axis corresponding to the position coordinate of the post-interpolation tool path in the workpiece coordinate system at each time point based on a specific relational expression using the obtained position coordinate on the second transfer axis as a constraint and representing a correlation between a position coordinate of the tool in the workpiece coordinate system and a position coordinate on each transfer axis.

Brief Description of the Drawings

[Fig. 1] Fig. 1 is a schematic perspective view of a machine tool to which a numerical control device according to an embodiment of the present invention is applied.

[Fig. 2] Fig. 2 is a functional block diagram showing a configuration of a numerical control device and a command input device according to an embodiment of the present invention.

[Fig. 3] Fig. 3 is a flow chart showing a numerical control process by a numerical control device according to an embodiment of the present invention.

[Fig. 4] Fig. 4 is a flow chart showing a detailed process of local interpolation among the numerical control process shown in Fig. 3.

[Fig. 5] Fig. 5 is a flow chart showing a detailed process representing reference time derivation, pulse interpolation, and pulse output to a transfer unit among the numerical control process shown in Fig. 3.

[Fig. 6] Fig. 6 is a diagram for explaining a method of calculating a distributed interval width in an embodiment of the present invention.

[Fig. 7] Fig. 7 is a schematic view showing a corner section that is an object of local interpolation among a W axis path.

[Fig. 8] Fig. 8 is a schematic view showing an abnormal data portion that is an object of local interpolation among a W axis path.

[Fig. 9] Fig. 9 is a diagram showing a case where an interval width of an interpolation block is greater than an interpolation interval width.

[Fig. 10] Fig. 10 is a diagram showing a case where an interval width of an interpolation block is smaller than an interpolation interval width.

[Fig. 11] Fig. 11 is a diagram showing a case where an interval width of an interpolation block is smaller than an interpolation interval width.

[Fig. 12] Fig. 12 is a diagram showing a stepped velocity curve and an acceleration/deceleration curve for deriving an intervening variable time function.

[Fig. 13] Fig. 13 is a diagram showing an example of a velocity curve in a case where velocity reaches a velocity upper limit value before a target point is reached.

[Fig. 14] Fig. 14 is a diagram showing another example of a velocity curve in a case where velocity reaches a velocity upper limit value before a target point is reached.

[Fig. 15] Fig. 15 is a diagram showing an example of a velocity curve in a case where a target point is reached and velocity reaches a velocity upper limit value when acceleration is being decreased according to an allowable jerk.

[Fig. 16] Fig. 16 is a diagram showing another example of a velocity curve in a case where a target point is reached and velocity reaches a velocity upper limit value when acceleration is being decreased according to an allowable jerk.

[Fig. 17] Fig. 17 is a diagram showing yet another example of a velocity curve in a case where a target point is reached and velocity reaches a velocity upper limit value when acceleration is being decreased according to an allowable jerk.

[Fig. 18] Fig. 18 is a diagram showing an example of a velocity curve in a case where velocity does not increase to a velocity upper limit value even when an intervening variable corresponding to a target point is reached.

[Fig. 19] Fig. 19 is a diagram showing an example of a velocity curve in a case where velocity exceeds a velocity upper limit value before a target point is reached.

[Fig. 20] Fig. 20 is a schematic perspective view of a machine tool to which a numerical control device according to a modification of an embodiment of the present invention is applied.

[Fig. 21] Fig. 21 is a functional block diagram showing a configuration of a numerical control device according to a modification of an embodiment of the present invention.

Embodiments of the Invention

Hereinafter, an embodiment of the present invention will be described with reference to the drawings.

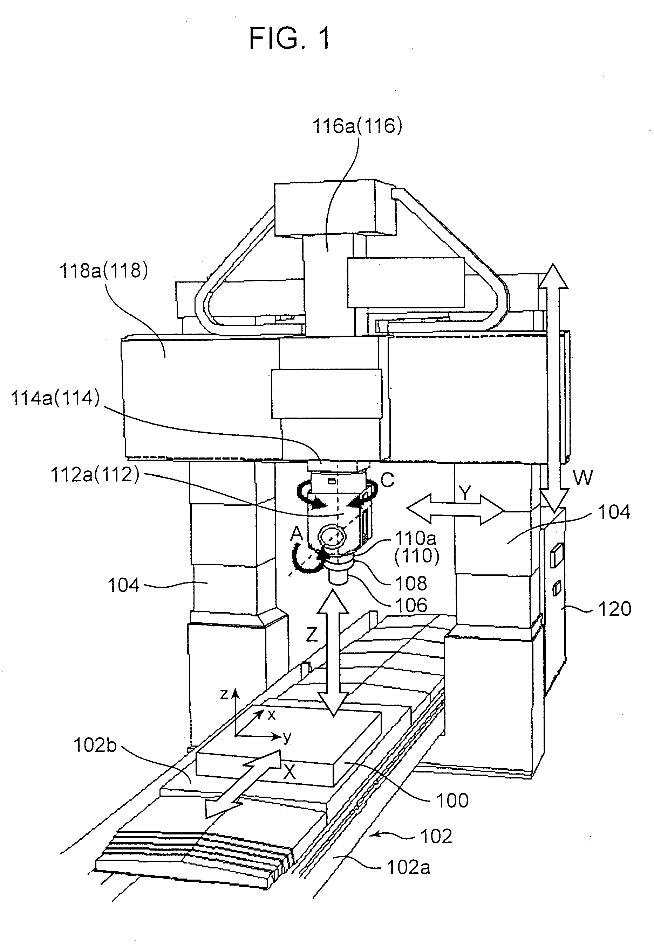

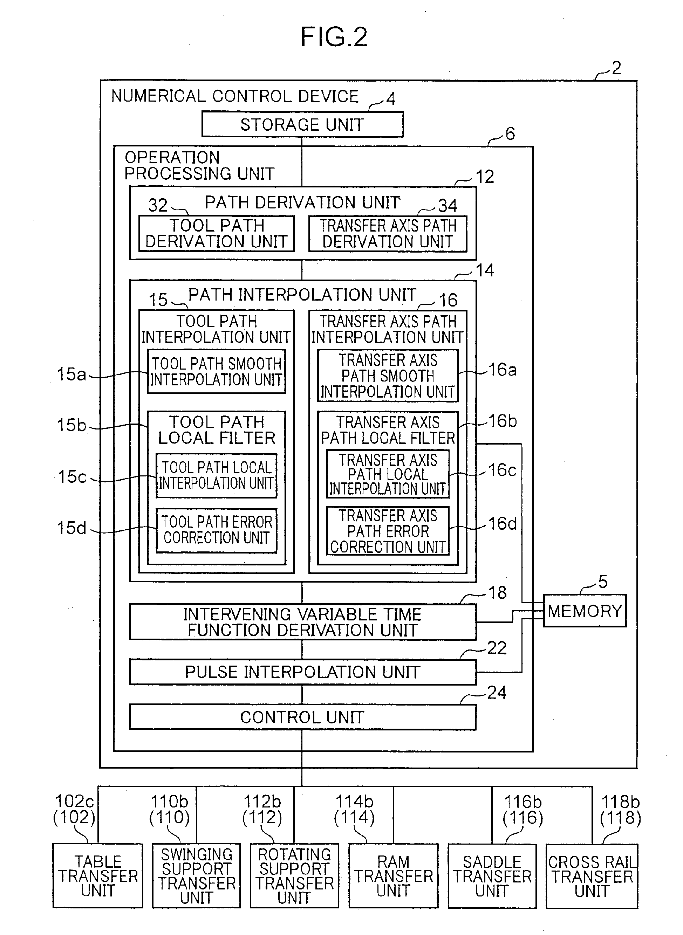

First, with reference to Figs. 1 and 2, a configuration of a machine tool to which a numerical control device 2 according to an embodiment of the present invention is applied will be described.

The machine tool is a gate-shaped machine tool for cutting a workpiece 100 which is set on a table 102b and which is an object to be machined with a tool 106 by moving the tool 106 on the workpiece 100 along a tool path expressed by a workpiece coordinate system. The workpiece coordinate system is set on the workpiece 100 placed on the table 102b and is constituted by an x axis that is parallel to a transfer direction of the table 102b in a horizontal plane, a y axis that is perpendicular to the x axis in the horizontal plane, and a z axis which is perpendicular to both the x axis and the y axis and which extends in a vertical direction.

As shown in Fig. 1, the machine tool includes a workpiece transfer device 102, two columns 104, the tool 106, a main shaft head 108, a swinging device 110, a rotating device 112, a first vertical transfer device 114, a horizontal transfer device 116, a second vertical transfer device 118, and a control box 120. Moreover, the workpiece transfer device 102, the swinging device 110, the rotating device 112, the first vertical transfer device 114, the horizontal transfer device 116, and the second vertical transfer device 118 move a transfer object that is the workpiece 100 or the tool 106 along a plurality of transfer axes in order to machine the workpiece 100 and are respectively included in a concept of a transfer device according to the present invention.

The workpiece transfer device 102 transfers the workpiece 100 along an X axis that extends in a specific direction in a horizontal plane. The X axis is included in a concept of a transfer axis according to the present invention. The workpiece transfer device 102 includes a bed 102a, a table 102b, and a table transfer unit 102c (refer to Fig. 2). The bed 102a is installed at a prescribed installation location, and the table 102b is mounted on the bed 102a so as to be movable along the X axis. The table 102b supports the workpiece 100 set on the table 102b from below. The table transfer unit 102c is provided on the bed 102a and transfers the table 102b along the X axis in order to transfer the workpiece 100 set on the table 102b along the X axis. The table transfer unit 102c has a servomotor (not shown) as a drive source and transfers the table 102b using power generated by the motor.

The two columns 104 are erected separated from each other on both sides of the workpiece transfer device 102 in a width direction of the workpiece transfer device 102 which is perpendicular to a travel direction (X axis direction) of the table 102b. Each of the columns 104 extends in a vertical direction (a direction of a W axis to be described later).

The tool 106 is for cutting the workpiece 100 and is held by the main shaft head 108. The main shaft head 108 rotates the held tool 106 around an axis of the tool 106. Machining of the workpiece 100 is performed as the tool 106 being rotated by the main shaft head 108 is brought into contact with the workpiece 100.

The swinging device 110 swings the tool 106 along an A axis around a horizontal axis. The A axis is included in a concept of a transfer axis according to the present invention. The swinging device 110 includes a swinging support 110a and a swinging support transfer unit 110b (refer to Fig. 2). The swinging support 110a is supported by the rotating device 112 to be swingable around a horizontal axis. In addition, the swinging support 110a supports the main shaft head 108 so that a rotational axis of the tool due to the main shaft head 108 is perpendicular to a horizontal axis that is a center of swinging of the swinging support 110a. The swinging support transfer unit 110b swings the swinging support 110a along the A axis in order to swing, together with the swinging support 110a, the main shaft head 108 and the tool 106 which are supported by the swinging support 110a along the A axis. The swinging support transfer unit 110b has a servomotor (not shown) as a drive source and swings the swinging support 110a using power generated by the motor.

The rotating device 112 rotates the tool 106 along a C axis around a vertical axis. The C axis is included in a concept of a transfer axis according to the present invention. The rotating device 112 includes a rotating support 112a and a rotating support transfer unit 112b (refer to Fig. 2). The rotating support 112a is supported by the first vertical transfer device 114 to be rotatable around a vertical axis. In addition, the rotating support 112a supports the swinging device 110 at a lower part of the rotating support 112a. The rotating support transfer unit 112b rotates the rotating support 112a along the C axis in order to rotate, together with the rotating support 112a, the swinging device 110, the main shaft head 108 and the tool 106 which are supported by the rotating support 112a along the C axis. The rotating support transfer unit 112b has a servomotor (not shown) as a drive source and rotates the rotating support 112a using power generated by the motor.

The first vertical transfer device 114 transfers the tool 106 along the Z axis which is perpendicular to the X axis and which extends in a vertical direction. The first vertical transfer device 114 is included in a concept of a first transfer device according to the present invention and the Z axis is included in a concept of a first transfer axis according to the present invention. The first vertical transfer device 114 includes a ram 114a (a first vertical support) and a ram transfer unit 114b (refer to Fig. 2). The ram 114a is arranged above the table 102b and is supported by the horizontal transfer device 116 to be movable in a vertical direction (an upward-downward direction) along the Z axis. In addition, the ram 114a supports the rotating device 112 at a position that is above the table 102b and lower than a cross rail 118a (to be described later) at a lower part of the ram 114a. The ram transfer unit 114b transfers the ram 114a along the Z axis in order to transfer, together with the ram 114a, the rotating device 112, the swinging device 110, the main shaft head 108, and the tool 106 which are supported by the ram 114a along the Z axis. The ram transfer unit 114b has a servomotor (not shown) as a drive source and transfers the ram 114a using power generated by the motor.

The horizontal transfer device 116 transfers the tool 106 along the Y axis that is perpendicular to both the X axis and the Z axis. The Y axis is included in a concept of a transfer axis according to the present invention. The horizontal transfer device 116 includes a saddle 116a (horizontal support) and a saddle transfer unit 116b (refer to Fig. 2). The saddle 116a is supported above the table 102b by the second vertical transfer device 118 to be movable along the Y axis. In other words, the saddle 116a is movable so as to traverse the table 102b in a width direction above the table 102b. In addition, the saddle 116a supports the first vertical transfer device 114 at a lower part of the saddle 116a. The saddle transfer unit 116b transfers the saddle 116a along the Y axis in order to transfer, together with the saddle 116a, the first vertical transfer device 114, the rotating device 112, the swinging device 110, the main shaft head 108, and the tool 106 which are supported by the saddle 116a along the Y axis. The saddle transfer unit 116b has a servomotor (not shown) as a drive source and transfers the saddle 116a using power generated by the motor.

The second vertical transfer device 118 transfers the tool 106 in a vertical direction along the W axis that is parallel to the Z axis. The second vertical transfer device 118 is included in a concept of a second transfer device according to the present invention and the W axis is included in a concept of a second transfer axis according to the present invention. In addition, the W axis and the Z axis are both transfer axes parallel to the z axis of the workpiece coordinate system and position coordinates of the W axis and the Z axis both include a z axis coordinate component that is a common coordinate axis component. Therefore, the W axis and the Z axis are indeterminate axes whose coordinates are not uniquely determined with respect to a coordinate of the z axis of the workpiece coordinate system.

The second vertical transfer device 118 includes a cross rail 118a (a second vertical support) and a cross rail transfer unit 118b (refer to Fig. 2). The cross rail 118a is arranged above the table 102b and laid between the two columns 104 so as to extend in a width direction (the Y axis direction) of the table 102b. The cross rail 118a is supported by front surfaces of the columns 104. In addition, the cross rail 118a is supported by the columns 104 to be movable in a vertical direction (an upward-downward direction) along the W axis. Furthermore, the cross rail 118a supports the horizontal transfer device 116.

The cross rail transfer unit 118b transfers the cross rail 118a along the W axis in order to transfer, together with the cross rail 118a, the horizontal transfer device 116, the first vertical transfer device 114, the rotating device 112, the swinging device 110, the main shaft head 108, and the tool 106 which are supported by the cross rail 118a along the W axis. Specifically, the cross rail transfer unit 118b includes a servomotor (not shown) provided on the cross rail 118a, ball screws (not shown) respectively annexed to the columns 104 so as to conform to the columns 104, and a transmission mechanism (not shown) that transmits power of the servomotor to the two ball screws so that the respective ball screws rotate in synchronization with each other. Each ball screw is screwed with a corresponding end of the cross rail 118a in a longitudinal direction (the Y axis direction) thereof and the cross rail 118a is transferred in the W axis direction in accordance with a rotation of the ball screws around their axes.

In addition, the second vertical transfer device 118 is a transfer device with a poorest acceleration performance among all transfer devices, and the acceleration performance of the second vertical transfer device 118 is significantly inferior to the acceleration performance of the other transfer devices 102, 110, 112, 114, and 116. In other words, an allowable acceleration of transfer of the tool 106 (the cross rail 118a) with respect to the W axis which is set to the second vertical transfer device 118 is a value that is significantly lower than an allowable acceleration of transfer of the transfer object with respect to corresponding transfer axes which are set to the other transfer devices 102, 110, 112, 114, and 116. The poorness of the acceleration performance when transferring the tool 106 by the second vertical transfer device 118 is attributable to the fact that a total weight of the cross rail 118a and the horizontal transfer device 116, the first vertical transfer device 114, the rotating device 112, the swinging device 110, the main shaft head 108, and the tool 106 mounted on the cross rail 118a which are all transferred by the cross rail transfer unit 118b in the second vertical transfer device 118 is significantly large.

The control box 120 has functions for controlling operations of the workpiece transfer device 102, the swinging device 110, the rotating device 112, the first vertical transfer device 114, the horizontal transfer device 116, and the second vertical transfer device 118, controlling operations of the main shaft head 108, and controlling other parts of the machine tool. This numerical control device 2 according to the present embodiment is built into the control box 120.

Next, a configuration of the numerical control device 2 according to the present embodiment will be described.

The numerical control device 2 according to the present embodiment numerically controls the respective transfer devices 102, 110, 112, 114, 116, and 118 by outputting a command pulse for each specific period to the transfer units 102c, 110b, 112b, 114b, 116b, and 118b of the respective transfer devices 102, 110, 112, 114, 116, and 118. As shown in Fig. 2, the numerical control device 2 includes a storage unit 4, a memory 5, and an operation processing unit 6.

Moreover, in the present embodiment, by instructing a movement of the tool 106 using a tool path constituted by a locus of a tip of the tool 106 and a locus of a posture variation of the tool 106 and a W axis path that is a locus of a position coordinate on the W axis corresponding to each position on the tool path, the movement of the tool 106 and a movement of a position coordinate on each transfer axis corresponding to the movement of the tool 106 are finalized. In this manner, by instructing a movement of the tool 106 using a W axis path in combination with a tool path, an indeterminate problem in that there exists an infinite number of transfer axis coordinates of the Z axis and the W axis that are transfer axes parallel to each other can be solved.

The storage unit 4 stores a machining program (NC program) that is a machining command for instructing machining of the workpiece 100. The machining program includes information on a large number of command points constituted by position coordinates in a workpiece coordinate system (an xyz axis coordinate system) through which the tip of the tool 106 is to pass during machining of the workpiece 100 and tool axis vectors which define a posture (an incline) of the tool 106 in the workpiece coordinate system, information on coordinates of specific points on the W axis corresponding to the respective command points, and a tool transfer velocity command indicating a transfer velocity of the tool 106. Moreover, the specific points on the W axis are points used as references when the second vertical transfer device 118 moves the cross rail 118a in order to move the tool 106 along the W axis during machining of the workpiece 100. A coordinate of each specific point on the W axis is arbitrarily specified by a creator of the machining program when the machining program is being created.

In addition, the storage unit 4 stores acceleration/deceleration conditions and other setting values that apply during machining of the workpiece 100. Examples of acceleration/deceleration conditions include an allowable velocity, an allowable acceleration, and an allowable jerk of the transfer object which are set for each of the transfer axes, as well as an upper limit value of velocity of an intervening, an upper limit value of acceleration of the intervening, and an upper limit value of jerk of the intervening variable, the intervening variable being an integrated value of travel amounts of the tool 106 including a posture variation of the tool 106. Moreover, the intervening variable is an integrated value of a value obtained by adding a variation of the posture (the incline) of the tool 106 to a travel amount of a tip point of the tool 106. Specifically, in the present embodiment, the intervening variable is constituted by an average value of a travel amount of the tip point of the tool 106 and a travel amount of a point that is separated from the tip point along an axis of the tool 106 by a certain distance toward a base end side of the tool 106. In addition, the other setting values include a secondary differential upper limit value of the W axis path. Furthermore, the storage unit 4 stores a distributed interval width table for a secondary differential value discontinuous section and a distributed interval width table for a secondary differential value excess section which are respectively set for a tool path (a locus of a coordinate of the tip point of the tool 106 on each coordinate axis in a workpiece coordinate system and loci of coordinates on the A axis and the C axis which represent a posture of the tool 106) and a locus of a coordinate on the W axis of a W axis path. In the distributed interval width table for a secondary differential value discontinuous section, a distributed interval width in which a primary differential value of a section of each transfer axis path is to be distributed is registered for each of a plurality of values of a difference in secondary differential values of the section, the section being a section in which a primary differential value with respect to the intervening variable is continuous and a secondary differential value with respect to the intervening variable is discontinuous among each transfer axis path. In addition, in the distributed interval width table for a secondary differential value excess section, a distributed interval width in which a primary differential value of a section of each transfer axis path is to be distributed is registered for each of a plurality of values of the secondary differential value of the section, the section being a section in which a secondary differential value with respect to the intervening variable exceeds a secondary differential upper limit value among each transfer axis path.

The memory 5 temporarily stores various types of information and stores, for example, a post-interpolation integrated function (to be described later) and other types of information.

The operation processing unit 6 performs various operation processing and includes, as functional blocks, a path derivation unit 12, a path interpolation unit 14, an intervening variable time function derivation unit 18, a pulse interpolation unit 22, and a control unit 24.

The path derivation unit 12 reads the machining program stored in the storage unit 4 and obtains a tool path and a W axis path from the read machining program. A tool path includes a function that expresses a movement of the tool 106 during machining of the workpiece by a position coordinate of the tool 106 in the workpiece coordinate system and the intervening variable. Specifically, a tool path is constituted by functions (an x axis path, a y axis path, and a z axis path) which express a movement of the tip point of the tool 106 during machining of the workpiece 100 by a position coordinate of the tip point in the workpiece coordinate system and the intervening variable and functions (an A axis path and a C axis path) which represent a posture variation of the tool 106 during machining of the workpiece 100 by a position coordinate on the A axis, a position coordinate on the C axis, and the intervening variable. In addition, a W axis path represents a movement of a specific point on the W axis by a position coordinate on the W axis of the specific point and the intervening variable, the specific point on the W axis corresponding to each position on the tool path. Moreover, the W axis path is included in a concept of a second transfer axis path according to the present invention.

The path derivation unit 12 includes a tool path derivation unit 32 and a transfer axis path derivation unit 34 as functional blocks. Moreover, the transfer axis path derivation unit 34 is included in a concept of a second transfer axis path derivation unit according to the present invention. The tool path derivation unit 32 obtains a tool path based on information on a command point constituted by a position coordinate of the tip of the tool 106 and a tool axis vector and based on a tool transfer velocity command, the information on the command point and the tool transfer velocity command being included in the machining program read from the storage unit 4. In addition, the transfer axis path derivation unit 34 obtains a W axis path based on information on a coordinate of a specific point on the W axis and based on a tool transfer velocity command, the information on the coordinate of the specific point and the tool that is included in the machining program read from the storage unit 4.

The path interpolation unit 14 respectively interpolates the tool path and the W axis path derived by the path derivation unit 12. The path interpolation unit 14 includes, as functional blocks, a tool path interpolation unit 15 that interpolates a tool path and a transfer axis path interpolation unit 16 that interpolates a W axis path.

The tool path interpolation unit 15 performs smooth interpolation in which the tool path derived by the tool path derivation unit 32 is interpolated so that a movement of the tool 106 represented by the tool path becomes smooth, and when there is a section in the tool path in which a secondary differential value with respect to the intervening variable is discontinuous, the tool path interpolation unit 15 performs local interpolation to make the secondary differential value of the section continuous. The tool path interpolation unit 15 includes a tool path smooth interpolation unit 15a and a tool path local filter 15b as functional blocks.

The tool path smooth interpolation unit 15a respectively performs the smooth interpolation on the respective coordinate axis paths (the x axis path, the y axis path, and the z axis path) in the workpiece coordinate system of the tip point of the tool 106, the A axis path, and the C axis path which constitute the tool path derived by the tool path derivation unit 32. Specifically, the tool path smooth interpolation unit 15a interpolates a portion that can be interpolated into a smooth curve passing through a command point within an analytically possible range among the tool path derived by the tool path derivation unit 32. The interpolation performed by the tool path smooth interpolation unit 15a is so-called block smooth interpolation in which an interval between adjacent command points among a tool path is assumed to be a command block and which is performed so that the command block and an adjacent command block are smoothly connected at a command point on a boundary between the command blocks. Specifically, the tool path smooth interpolation unit 15a interpolates a tool path derived by the tool path derivation unit 32 to become a tool path in which a primary differential value and a secondary differential value with respect to the intervening variable are respectively continuous before and after a command point at a boundary between adjacent command blocks and which passes through the command point. However, there are cases where a tool path includes a section in which a variation of a locus of the tool path with respect to a variation of the intervening variable is sudden and which cannot be interpolated by such block smooth interpolation into a smooth curve that passes through a command point of the locus. Examples of such a section include an abnormal data portion in which increase/decrease is repeated in minute units and a corner portion that is intentionally specified by the machining program. In addition, a tool path also includes a section that is left as-is without being interpolated by the tool path smooth interpolation unit 15a even if a secondary differential is discontinuous such as a contact portion between a straight line and an arc and a contact portion between circles. The tool path smooth interpolation unit 15a does not interpolate such sections among the tool path and retains the original tool path, and smoothly interpolates a portion that can be interpolated into a curve which passes through the command point and in which a primary differential value and a secondary differential value with respect to the intervening variable are respectively continuous before and after the command point.

The tool path local filter 15b performs the local interpolation on a section which had not been interpolated by the tool path smooth interpolation unit 15a and in which a velocity (a primary differential value with respect to the intervening variable) indicated by the section is not zero among the tool path (the x axis path, the y axis path, the z axis path, the A axis path, and the C axis path). Specifically, the tool path local filter 15b sets, as an interpolation object point, a command point at which a primary differential value or a secondary differential value with respect to the intervening variable is discontinuous among the tool path. In addition, the tool path local filter 15b locally interpolates an interpolation interval so that the secondary differential value becomes continuous at the interpolation object point, the interpolation interval being an interval obtained by adding a specific interval width to before and after the interpolation object point among the tool path.

Furthermore, the tool path local filter 15b includes a tool path local interpolation unit 15c and a tool path error correction unit 15d as functional blocks.

The tool path local interpolation unit 15c obtains an error-having interpolation path of a tool path that is interpolated so that a variation of a differential which is discontinuous at an interpolation object point within an interpolation interval becomes a continuous variation by performing interpolation processing on each of a plurality of interpolation blocks having a portion included in an adjustment interval that is an interpolation interval of a tool path extended in both longitudinal directions to obtain a post-interpolation function of each interpolation block and integrating the post-interpolation functions to obtain a post-interpolation integrated function, and extracting an interval corresponding to an interpolation interval from the obtained post-interpolation integrated function. In addition, the tool path error correction unit 15d corrects the error-having interpolation path obtained by the tool path local interpolation unit 15c so that a value corresponding to a start point of the interpolation interval of the error-having interpolation path of the tool path equals a value of a start point of an interpolation interval of a tool path which has not been subjected to local interpolation and that a value corresponding to an end point of the interpolation interval of the error-having interpolation path of the tool path equals a value of an end point of an interpolation interval of a tool path which has not been subjected to local interpolation, and replaces the interpolation interval of the tool path with the corrected interpolation path.

The transfer axis path interpolation unit 16 performs smooth interpolation in which the W axis path derived by the transfer axis path derivation unit 34 is interpolated so that a movement of a coordinate of a specific point on the W axis that is represented by the path becomes smooth, and performs local interpolation in which the W axis path after smooth interpolation is interpolated so that a secondary differential value of the W axis path with respect to the intervening variable becomes smaller and, when the W axis path after the smooth interpolation has a section at which the secondary differential value with respect to the intervening variable is discontinuous, the W axis path after smooth interpolation is interpolated so that the secondary differential value at the section becomes continuous. The transfer axis path interpolation unit 16 is included in a concept of a second transfer axis path interpolation unit according to the present invention. The transfer axis path interpolation unit 16 includes a transfer axis path smooth interpolation unit 16a and a transfer axis path local filter 16b as functional blocks.

The transfer axis path smooth interpolation unit 16a performs smooth interpolation on the W axis path derived by the transfer axis path derivation unit 34. The transfer axis path smooth interpolation unit 16a performs, on the W axis path, a block smooth interpolation similar to the smooth interpolation performed on the tool path by the tool path smooth interpolation unit 15a.

The transfer axis path local filter 16b performs local interpolation on a section that had not been interpolated by the transfer axis path smooth interpolation unit 16a among the W axis path derived by the transfer axis path derivation unit 34 and on a section in which the secondary differential value with respect to the intervening variable exceeds a secondary differential upper limit value among the W axis path, the secondary differential upper limit value being set for the W axis. Specifically, the transfer axis path local filter 16b sets, as interpolation object points, a command point at which the secondary differential value with respect to the intervening variable is discontinuous and a command point at which the secondary differential value with respect to the intervening variable exceeds the secondary differential upper limit value among the W axis path. In addition, in an interpolation interval that is an interval obtained by adding a specific interval width to before and after an interpolation object point among the W axis path, when the secondary differential value with respect to the intervening variable at the interpolation object point in the interpolation interval exceeds the secondary differential upper limit value, the transfer axis path local filter 16b locally interpolates the interpolation interval so that the secondary differential value equals or falls below the secondary differential upper limit value, and when the secondary differential value with respect to the intervening variable at the interpolation object point in the interpolation interval is discontinuous, the transfer axis path local filter 16b locally interpolates the interpolation interval so that the secondary differential value with respect to the intervening variable at the interpolation object point becomes continuous. Moreover, an interpolation interval with respect to an interpolation object point at which the secondary differential value is discontinuous is an interval obtained by adding an interval width to before and after the interpolation object point, the interval width being set based on the distributed interval width table for a secondary differential value discontinuous section. An interpolation interval with respect to an interpolation object point at which the secondary differential value exceeds the secondary differential upper limit value is an interval obtained by adding an interval width to before and after the interpolation object point, the interval width being set based on the distributed interval width table for a secondary differential value excess section.

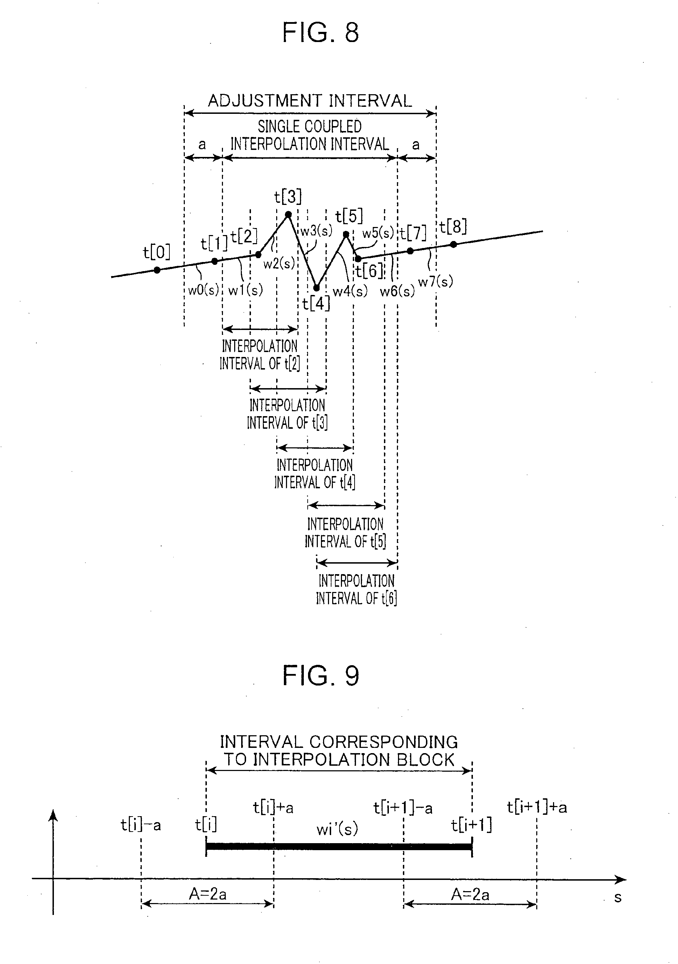

Examples of a section at which the secondary differential value with respect to the intervening variable is discontinuous include a corner portion in Fig. 8 or an abnormal data portion in Fig. 9 which are shown with respect to the W axis path. Since the primary differential value and the secondary differential value with respect to the intervening variable are discontinuous at a command point positioned at an apex of the corner position (t[3] in Fig. 8) and respective command points positioned at respective apexes of the abnormal data portion (t[2] to t[6] in Fig. 9), these command points become interpolation object points. In addition, when a plurality of interpolation object points exist on the W axis path and interpolation intervals of adjacent interpolation object points overlap each other, the transfer axis path local filter 16b assumes, as a single interpolation interval, a section between a start point of an interpolation interval that is closest to a start point of the W axis path among the overlapping interpolation intervals and an end point of an interpolation interval that is closest to an end point of the W axis path among the overlapping interpolation intervals, and locally interpolates the W axis path in the single interpolation interval. Furthermore, the transfer axis path local filter 16b locally interpolates the interpolation interval so that the W axis path after local interpolation is respectively continuously connected before and after a start point and before and after an end point of each interpolation interval (when adjacent interpolation intervals overlap each other, an interpolation interval that couples the adjacent interpolation intervals with each other).

As a specific configuration of the transfer axis path local filter 16b, the transfer axis path local filter 16b includes a transfer axis path local interpolation unit 16c and a transfer axis path error correction unit 16d as functional blocks.

The transfer axis path local interpolation unit 16c obtains an error-having interpolation path of the W axis path that is interpolated so that when the secondary differential value with respect to the intervening variable is discontinuous at an interpolation object point within an interpolation interval, the secondary differential value becomes continuous, and when the secondary differential value with respect to the intervening variable exceeds the upper limit value at an interpolation object point within an interpolation interval, the secondary differential value equals or falls below the secondary differential upper limit value by performing interpolation processing on each of a plurality of interpolation blocks having a portion included in an adjustment interval that is an interpolation interval of the W axis path extended in both longitudinal directions to obtain a post-interpolation function of each interpolation block, integrating the post-interpolation functions to obtain a post-interpolation integrated function, and extracting an interval corresponding to an interpolation interval from the obtained post-interpolation integrated function. In addition, the transfer axis path error correction unit 16d corrects the error-having interpolation path obtained by the transfer axis path local interpolation unit 16c so that a value corresponding to a start point of the interpolation interval of the error-having interpolation path equals a value of a start point of an interpolation interval of a W axis path which has not been subjected to local interpolation and that a value corresponding to an end point of the interpolation interval of the error-having interpolation path equals a value of an end point of an interpolation interval of a W axis path which has not been subjected to local interpolation, and replaces the interpolation interval of the W axis path with the corrected interpolation path. A detailed process of local interpolation performed by the transfer axis path local interpolation unit 16c and the transfer axis path error correction unit 16d of the transfer axis path local filter 16b will be described later.

The intervening variable time function derivation unit 18 obtains, based on acceleration/deceleration conditions, the post-interpolation tool path and the post-interpolation W axis path, an intervening variable time function (a velocity curve of the intervening variable) expressing a variation in the intervening variable with respect to a lapse of a prescribed reference time so as to satisfy a condition that an acceleration on each transfer axis of the transfer object does not exceed the allowable acceleration for the transfer axis included in the acceleration/deceleration conditions, the acceleration/deceleration conditions including an allowable acceleration for each transfer axis when moving the transfer object along each transfer axis, the post-interpolation tool path being the tool path after interpolation performed by the tool path interpolation unit 15, the post-interpolation W axis path being the W axis path after interpolation performed by the transfer axis path interpolation unit 16. Specifically, the intervening variable time function derivation unit 18 derives an intervening variable time function that represents maximum acceleration capable of moving the transfer object in accordance with the post-interpolation tool path and the post-interpolation W axis path within a range of allowable acceleration included in the acceleration/deceleration conditions. Moreover, the post-interpolation W axis path is included in a concept of a post-interpolation second transfer axis path according to the present invention.

The pulse interpolation unit 22 obtains a command pulse for each specific period based on the intervening variable time function obtained by the intervening variable time function derivation unit 18, the post-interpolation tool path, and the post-interpolation W axis path. The pulse interpolation unit 22 derives an intervening variable corresponding to each time point at every unit time of reference time, derives a position coordinate on each of the coordinate axes (the x axis, the y axis, the z axis, the A axis, and the C axis) of the post-interpolation tool path and a position coordinate on the W axis of the post-interpolation W axis path corresponding to the derived intervening variable at each time point, derives a position coordinate at each time point on each of the transfer axes (the X axis, the Y axis, the Z axis, the W axis, the A axis, and the C axis) based on the derived position coordinate of the post-interpolation tool path on each coordinate axis and the derived position coordinate of the post-interpolation W axis path on the W axis at each time point, and derives a command pulse that indicates a variation of the position coordinate of each transfer axis per unit time of actual time (a transfer amount of the transfer object per unit time for each transfer axis). In this case, actual time refers to time which proceeds per unit time that is equal to the specific period.

Specifically, the pulse interpolation unit 22 obtains an intervening variable corresponding to each time point at every reference unit time of the reference time from the intervening variable time function derived by the intervening variable time function derivation unit 18. In addition, the pulse interpolation unit 22 obtains a position coordinate on each coordinate axis of the post-interpolation tool path which corresponds to the obtained intervening variable at each time point and a position coordinate on the W axis of the post-interpolation W axis path which corresponds to the intervening variable at each time point. Furthermore, the pulse interpolation unit 22 obtains a position coordinate on each transfer axis corresponding to the position coordinate on each coordinate axis of the post-interpolation tool path corresponding to the intervening variable at each time point based on a relational expression using the obtained position coordinate on the W axis at each time point as a constraint and representing a correlation between a position coordinate (respective coordinates of the x axis, the y axis, the z axis, the A axis, and the C axis) including a posture of the tool 106 in the workpiece coordinate system and a position coordinate on each transfer axis. Moreover, the pulse interpolation unit 22 obtains a variation per reference unit time of the position coordinate on the transfer axes from the obtained position coordinate on each transfer axis at each time point, and sets the variation as a transfer amount of the transfer object per reference unit time for a corresponding transfer axis. In addition, the pulse interpolation unit 22 sets the transfer amount of the transfer object per reference unit time for each transfer axis obtained in this manner as a command pulse per unit time (per the specific period) of actual time.

The control unit 24 controls operations of the transfer units 102c, 110b, 112b, 114b, 116b, and 118b of the respective transfer devices 102, 110, 112, 114, 116, and 118. The control unit 24 outputs, to the servomotor of each transfer unit 102c, 110b, 112b, 114b, 116b, or 118b, a command pulse indicating a transfer amount with respect to a transfer axis corresponding to the transfer unit among the command pulses per the specific period obtained by the pulse interpolation unit 22 and, accordingly, causes each transfer device 102, 110, 112, 114, 116, or 118 to move the transfer object in accordance with the outputted command pulse. As a result, the table transfer unit 102c transfers the table 102b, the swinging support transfer unit 110b transfers the swinging support 110a, the rotating support transfer unit 112b transfers the rotating support 112a, the ram transfer unit 114b transfers the ram 114a, the saddle transfer unit 116b transfers the saddle 116a, and the cross rail transfer unit 118b transfers the cross rail 118a per the specific period by a transfer amount indicated by the command pulse from the control unit 24 along each corresponding transfer axis.

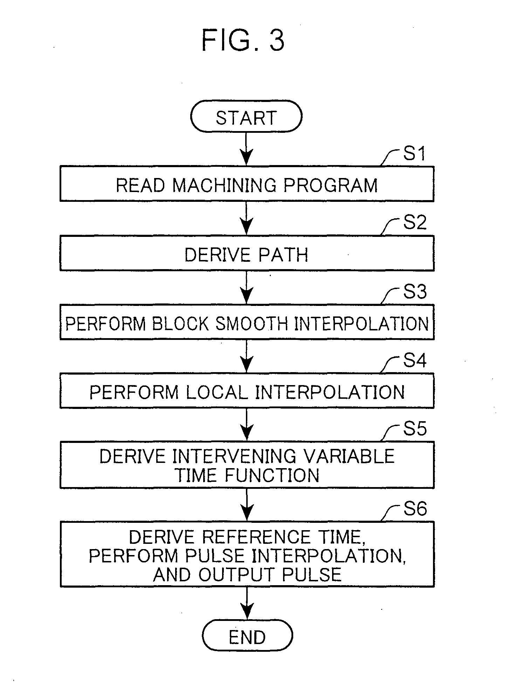

Next, a numerical control process by the numerical control device 2 according to the present embodiment during machining of the workpiece 100 will be described with reference to the flow charts shown in Figs. 3 to 5.

First, the path derivation unit 12 reads the machining program (NC program) stored in the storage unit 4 (step S1 in Fig. 3) and the path derivation unit 12 derives a tool path and a W axis path from the read machining program (step S2). At this point, the tool path derivation unit 32 of the path derivation unit 12 derives a tool path (an x axis path, a y axis path and a z axis path representing a locus of the tip point of the tool 106, and an A axis path and a C axis path representing a posture variation of the tool 106) based on information on a large number of command points and a tool transfer velocity command that are included in the machining program read from the storage unit 4, the information on the command points being constituted by a position coordinate of the tip point of the tool 106 and a tool axis vector, and the transfer axis path derivation unit 34 of the path derivation unit 12 derives a W axis path based on information on a coordinate of a specific point on the W axis and a tool transfer velocity command that are included in the machining program read from the storage unit 4. Moreover, in the numerical control process according to the present embodiment, it is assumed that the machine tool performs machining of the workpiece 100 without varying the posture of the tool 106. Therefore, a constant value (0, 0, 1) is stored in the storage unit 4 as a tool axis vector in a workpiece coordinate system (x, y, z). As a result, the tool path derivation unit 32 derives a constant value 0 as both the A axis path and the C axis path that constitute the tool path. Therefore, in the following process according to the present embodiment, unless otherwise noted, processes related to the tool path are to be performed only on the x axis, the y axis, and the z axis, processes related to the respective transfer axis paths and the respective transfer axes are to be performed only on the X axis, the Y axis, the Z axis, and the W axis, and processes are not performed on the A axis and the C axis.

Next, the tool path smooth interpolation unit 15a performs block smooth interpolation on the tool path derived by the tool path derivation unit 32 and the transfer axis path smooth interpolation unit 16a performs block smooth interpolation on the W axis path derived by the transfer axis path derivation unit 34 (step S3).

Specifically, the tool path smooth interpolation unit 15a interpolates the tool path (the x axis path, the y axis path, and the z axis path of the tip point of the tool 106) so that a primary differential and a secondary differential are respectively continuous before and after a command point positioned on a boundary between adjacent command blocks among the tool path and that the tool path after interpolation passes through the command point. In doing so, the tool path smooth interpolation unit 15a performs block smooth interpolation on only a portion on which such interpolation is analytically possible among the tool path and retains the original tool path without performing interpolation for portions on which such interpolation is analytically impossible. Specifically, the tool path smooth interpolation unit 15a retains the original tool path without performing interpolation for a portion in which a bending angle of the tool path at a command point is greater than a certain angle set in advance and a portion in which an error generated on the tool path after performing block smooth interpolation on the tool path prior to interpolation is greater than an allowable error set in advance. In addition, the transfer axis path smooth interpolation unit 16a performs block smooth interpolation on the W axis path, the block smooth interpolation being similar to that performed on the tool path by the tool path smooth interpolation unit 15a.

Next, the tool path local filter 15b locally interpolates the tool path after block smooth interpolation and the transfer axis path local filter 16b locally interpolates the W axis path after block smooth interpolation (step S4). Since the local interpolation by the tool path local filter 15b and the local interpolation by the transfer axis path local filter 16b are performed in a similar manner and only differ from each other in their objects, a process of local interpolation of the W axis path by the transfer axis path local filter 16b will be representatively described below.

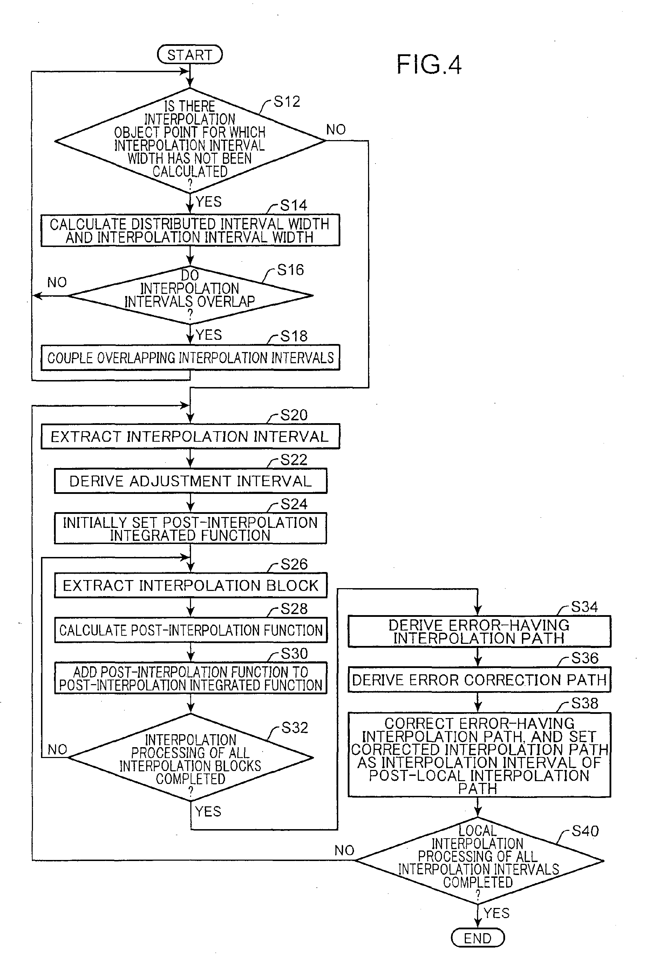

The transfer axis path local filter 16b sets, as interpolation object sections, a section at which a secondary differential value with respect to the intervening variable exceeds the secondary differential upper limit value set in advance among the W axis path after smooth interpolation and a section at which a secondary differential value with respect to the intervening variable is discontinuous (a section at which both a primary differential value and a secondary differential value are discontinuous and a section at which a primary differential value is continuous and a secondary differential value is discontinuous) among the W axis path after smooth interpolation, and locally interpolates only interpolation intervals obtained by expanding the interpolation object sections by a specific interval width in both longitudinal directions among the W axis path after smooth interpolation. Accordingly, when there is a section at which a secondary differential value with respect to the intervening variable exceeds the secondary differential upper limit value in the W axis path after smooth interpolation, the section is interpolated so that the secondary differential value of the section equals or falls below the secondary differential upper limit value. In addition, when there is a section on which the block smooth interpolation is not performed and a secondary differential value with respect to the intervening variable is discontinuous among the W axis path, the section is interpolated so that the secondary differential value of the section becomes continuous. A detailed process of the local interpolation performed by the transfer axis path local filter 16b is shown in Fig. 4.

In the local interpolation, first, the transfer axis path local interpolation unit 16c of the transfer axis path local filter 16b determines whether or not an interpolation object point that is a command point for which an interpolation interval width that is an interval width of an interpolation interval has not been calculated exists on the W axis path after smooth interpolation (step S12). When the transfer axis path local interpolation unit 16c determines that such an interpolation object point exists on the W axis path after smooth interpolation, the transfer axis path local interpolation unit 16c calculates a distributed interval width and an interpolation interval width of the interpolation object section for which the interpolation interval width has not been calculated (step S 14).

The transfer axis path local interpolation unit 16c first obtains a distributed interval width of a section in which both a primary differential value and a secondary differential value with respect to the intervening variable are discontinuous among the W axis path after smooth interpolation. Moreover, a distributed interval width as used herein refers to an interval width in which a primary differential value of the W axis path with respect to the intervening variable is distributed based on a distribution function (to be described later). Specifically, the transfer axis path local interpolation unit 16c calculates a distributed interval width so as to satisfy a condition that a positional error at an interpolation object point is equal to an allowable error of the W axis, the positional error being a positional error between the W axis path before local interpolation and the W axis path after local interpolation, and obtains the interpolation interval width as an interval width equal to or greater than the calculated distributed interval width. More specifically, for example, a distributed interval width is calculated as follows.

While a calculation formula for a distributed interval width differs depending on a distribution function used to perform distribution of a primary differential value of the W axis path (to be described later), in this case, a distributed interval width is calculated on the assumption that a bell-like distribution function is to be used to perform distribution of a primary differential value of the W axis path (to be described later).

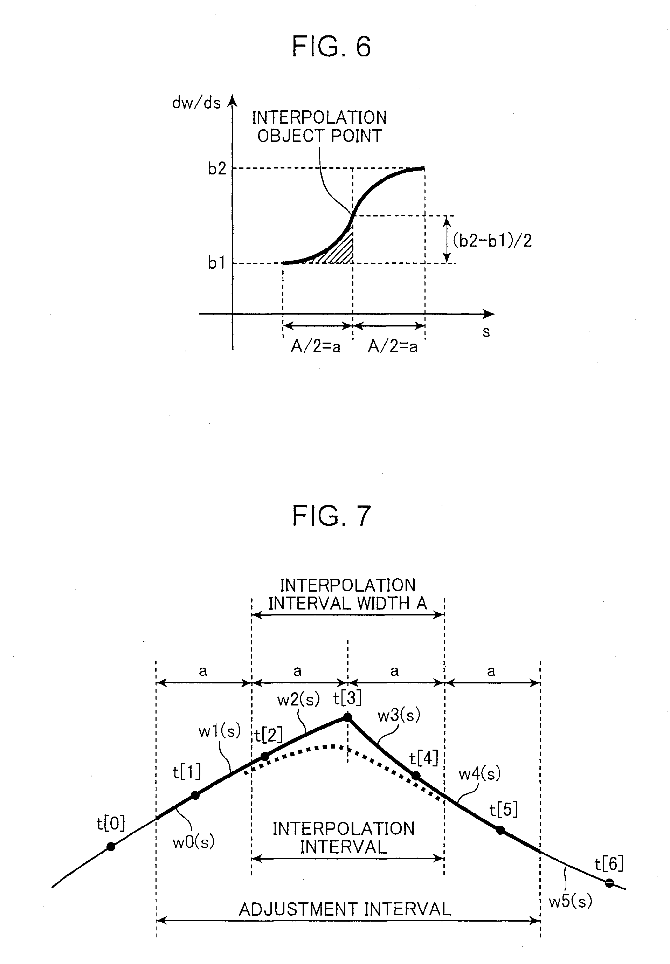

If b1 denotes a value of a primary differential value with respect to an intervening variable s of the W axis path immediately before an interpolation object point and b2 denotes a value immediately after the interpolation object point, then a primary differential function w'(s) of the intervening variable s at a position coordinate w of the W axis path may be represented by Expression (1) below. Moreover, the primary differential function w'(s) traces a quadratic curve such as that shown in Fig. 6.

$$ w'(s) = dw/ds = ks^2 + b1 \ldots (1) $$

Note that k is a prescribed coefficient. Here, a positional error at an interpolation object point of the W axis path after local interpolation with respect to the W axis path before local interpolation corresponds to an area of a hatched region in Fig. 6. Therefore, if the positional error is denoted by E, then the positional error E is obtained by Expression (2) below.

$$ E = \int_{s=0}^{s=A} (w'(s) - b1)ds = kA^3/3 \quad \cdots (2) $$

In addition, assuming that the quadratic curve traced by the primary differential function w'(s) has a precisely intermediate value of b1 and b2 at a center of the interpolation interval width, then Expression (3) holds true.

$$ ks^2 + b1 = (b1 + b2)/2 \ldots (3) $$

By modifying Expression (3), we get Expression (4) below.

$$ k = (b2 - b1)/2s^2 \ldots (4) $$

Since s = A/2 holds true at the center point of the interpolation interval width, from Expression (4), the coefficient k can be obtained by Expression (5) below.

$$ k = 2(b2 - b1)/A^2 \ldots (5) $$

By substituting the coefficient k obtained by Expression (5) into Expression (2) and modifying Expression (2), we get Expression (6) below.

$$E = 2\,(b2 - b1)\,A/3 \ldots (6)$$

Now, if an allowable error on the W axis is denoted by $\tau$, then the distributed interval width A satisfying a condition that the error E is equal to the allowable error $\tau$ is obtained by Expression (7) below from Expression (6).

$$A = 3\tau/2\,(b2 - b1) \ldots (7)$$

Moreover, when the value of the distributed interval width obtained by Expression (7) exceeds an upper limit parameter set in advance, a value of the upper limit parameter is set as the distributed interval width A.

On the other hand, with a section at which a primary differential value with respect to the intervening variable is continuous and a secondary differential value with respect to the intervening variable is discontinuous among the W axis path after smooth interpolation, the transfer axis path local interpolation unit 16c obtains a distributed interval width based on the distributed interval width table for a secondary differential discontinuous section with respect to a W axis path stored in the storage unit 4. Specifically, the transfer axis path local interpolation unit 16c obtains a difference in secondary differential values at a section in which the secondary differential value is discontinuous among the W axis path after smooth interpolation, and calculates a distributed interval width corresponding to the obtained difference in secondary differential values based on a corresponding distributed interval width table for a secondary differential discontinuous section. In doing so, when the value of the difference in secondary differential values obtained by the transfer axis path local interpolation unit 16c is between two adjacent values among values of differences in the large number of secondary differential values registered in the distributed interval width table for a secondary differential discontinuous section with respect to a W axis path, the transfer axis path local interpolation unit 16c obtains a distributed interval width corresponding to the difference in secondary differential values obtained by the transfer axis path local interpolation unit 16c by proportional distribution.

In addition, with a section at which a secondary differential value with respect to the intervening variable exceeds a secondary differential upper limit value set in advance among the W axis path after smooth interpolation, the transfer axis path local interpolation unit 16c obtains a distributed interval width based on the distributed interval width table for a secondary differential value excess section with respect to a W axis path, the distributed interval width table being stored in the storage unit 4. Specifically, the transfer axis path local interpolation unit 16c obtains a corresponding distributed interval width from the distributed interval width table for a secondary differential value excess section with respect to a W axis path which is stored in the storage unit 4 based on a secondary differential value of a section at which a secondary differential value exceeds a secondary differential upper limit value among the W axis path after smooth interpolation. In doing so, when the secondary differential value of the section at which the secondary differential value exceeds the secondary differential upper limit value among the W axis path after smooth interpolation is between two adjacent values among the large number of secondary differential values registered in the distributed interval width table for a secondary differential value excess section with respect to a W axis path, the transfer axis path local interpolation unit 16c obtains a distributed interval width corresponding to the secondary differential value of the section at which the secondary differential value exceeds the secondary differential upper limit value by proportional distribution.

In the present embodiment, an interval width equal to the distributed interval width calculated as described above is set as an interpolation interval width.

Next, the transfer axis path local interpolation unit 16c determines whether or not an interpolation interval with respect to a currently-targeted interpolation object point overlaps with an interpolation interval of another interpolation object point (step S16). At this point, if the transfer axis path local interpolation unit 16c determines that the interpolation intervals do not overlap each other, the transfer axis path local interpolation unit 16c returns to step S 12 and repetitively performs subsequent processes. On the other hand, when the transfer axis path local interpolation unit 16c determines that the interpolation intervals overlap each other, the transfer axis path local interpolation unit 16c couples the overlapping interpolation intervals with each other and creates a single interpolation interval (step S18). Specifically, the transfer axis path local interpolation unit 16c assumes, as a single interpolation interval, an interval between a start point of an interpolation interval that is positioned closest to a start point of the W axis path among the overlapping interpolation intervals and an end point of an interpolation interval that is positioned closest to an end point of the W axis path among the overlapping interpolation intervals. Moreover, in this case, as the distributed interval width to be used when performing distribution (to be described later) with respect to the single coupled interpolation interval, a smallest distributed interval width among the distributed interval widths corresponding to the respective interpolation intervals is adopted. Subsequently, a return is made to step S12 and subsequent processes are repetitively performed.

When the transfer axis path local interpolation unit 16c determines in step S 12 that there are no more interpolation object points on the W axis path after smooth interpolation for which an interpolation interval width has not been calculated, the transfer axis path local interpolation unit 16c next extracts a single interpolation interval on which subsequent local interpolation processing is to be performed (step S20). At this point, when there are a plurality of interpolation intervals on W axis tool path after smooth interpolation on which local interpolation processing has not been performed, the transfer axis path local interpolation unit 16c extracts an interpolation interval that is positioned closest to the start point of the W axis path among the interpolation intervals. Moreover, the interpolation interval coupled in step S18 is treated as a single interpolation interval.

Subsequently, the transfer axis path local interpolation unit 16c obtains an adjustment interval with respect to the extracted interpolation interval (step S22). The adjustment interval (refer to Figs. 7 and 8) is an interval created by expanding an interpolation interval before and after respectively by an interval width a that is half of the distributed interval width A and is used as a reference when determining an interpolation block that is a calculation object of a post-interpolation function (to be described later). Subsequently, the transfer axis path local interpolation unit 16c initially sets the post-interpolation integrated function stored in the memory 5 to zero (step S24).

Next, the transfer axis path local interpolation unit 16c extracts an interpolation block that is a command block for performing interpolation processing to obtain a post-interpolation function (to be described later) (step S26). Specifically, the transfer axis path local interpolation unit 16c selects a plurality of command blocks (command blocks w0(s) to w5(s) in Fig. 7, and command blocks w0(s) to w7(s) in Fig. 8) having at least a part of an interval included in the adjustment interval obtained in step S22, and extracts, as the interpolation block, a block on which interpolation processing for obtaining a post-interpolation function (to be described later) has not been completed and which is positioned closest to the start point of the W axis path among the command blocks.

Next, the transfer axis path local interpolation unit 16c obtains a post-interpolation function of the extracted interpolation block (step S28). In the present embodiment, the transfer axis path local interpolation unit 16c obtains a post-interpolation function using a bell-like distribution function f(s). Note that the bell-like distribution function f(s) is represented by Expression below.

$$f(s) = \begin{cases} (4/A \times s + 2)/A & (-A/2 \leqq s \leqq 0) \\ (-4/A \times s + 2)/A & (0 \leqq s \leqq A/2) \end{cases}$$

Moreover, f(s) = 0 holds true outside of the distributed interval $-A/2 \leq s \leq A/2$.

When calculating a post-interpolation function, the transfer axis path local interpolation unit 16c first sets an integration interval [s - A/2, s + A/2] having, as a center, each first position s at which the intervening variable differs in the extracted interpolation block and having an interval width equal to the distributed interval width A. Subsequently, the transfer axis path local interpolation unit 16c obtains a primary differential wi'(S) of the intervening variable of the W axis path at each second position S at which the intervening variable in the set integration interval [s - A/2, s + A/2] differs, and integrates, over the integration interval [s - A/2, s +A/2], a post-distribution differential function wi'(S)·f(S - s) obtained when distributing the primary differential wi'(S) at each second position S based on the distribution function f(s) in a distributed interval having a corresponding second position S as a center and having the distributed interval width A, and thereby obtains a post-interpolation function qi'(s). As a result of a distribution computation using the distribution function f(s) of the primary differential wi'(S) of the interpolation block with respect to the intervening variable and an integration of the post-distribution differential function wi'(S)·f(s - S) obtained by the distribution computation described above, the interpolation block is interpolated so that the secondary differential value of the interpolation block with respect to the intervening variable becomes smaller. More specifically, the transfer axis path local interpolation unit 16c obtains a post-interpolation function qi'(s) of an interpolation block wi(s) according to Expression (9) below.

$$qi'(s) = \int_{S=s-A/2}^{S=s+A/2} (wi'(S) \cdot f(s-S))dS \qquad \cdots (9)$$

The post-interpolation function qi'(s) obtained in this manner is expressed differently between a case where the interval width of the interpolation block wi(s) is greater than the interpolation interval width A and a case where the interval width of the interpolation block pi(s) is smaller than the interpolation interval width A. The post-interpolation function qi'(s) in each case is as follows.

When the interval width of the interpolation block wi(s) is greater than the interpolation interval width A = 2a (refer to Fig. 9), if t[i] denotes a command point closer to the start point of the W axis path among the two command points that define both ends of the interpolation block wi(s) and t[i + 1] denotes a command point closer to the end point of the W axis path among the two command points and an interval width that is half of the interpolation interval width A is denoted by a, then an interval corresponding to the interpolation block wi(s) is expressed as t[i] < s < t[i +1] and a relationship expressed as t[i] - a < t[i] + a < t[i + 1] - a < t[i + 1] + a holds true. In addition, the primary differential wi'(s) of the intervening variable s of the interpolation block wi(s) is depicted by a bold line in Fig. 9.

In this case, the post-interpolation function qi'(s) obtained by the interpolation processing is subdivided into a function qi11'(s) of an interval expressed as t[i] - a < s < t[i] + a, a function qi12'(s) of an interval expressed as t[i] + a < s < t[i + 1] - a, and a function qi13'(s) of an interval expressed as t[i + 1] - a < s < t[i + 1] + a.

The function qi11'(s) of the interval t[i] - a < s < t[i] + a is represented by Expression (10) below.

$$qi11'(s) = \int_{S=t[i]}^{S=s+a} (wi'(S) \cdot f(s-S)) dS \quad \cdots (10)$$

The function qi12'(s) of the interval t[i] + a < s < t[i + 1] - a is represented by Expression (11) below.

$$qi12'(s) = \int_{S=s-a}^{S=s+a} (wi'(S) \cdot f(s-S)) dS \quad \cdots (11)$$

The function qi13'(s) of the interval t[i + 1] - a < s < t[i + 1] + a is represented by Expression (12) below.

$$qi13'(s) = \int_{S=s-a}^{S=t[i+1]} (wi'(S) \cdot f(s-S)) dS \quad \cdots (12)$$

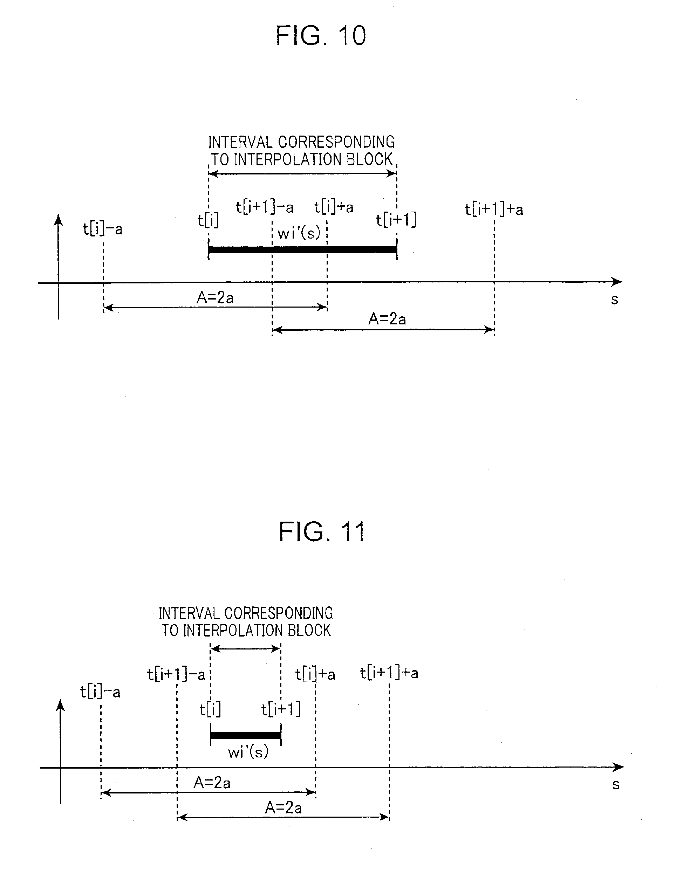

Next, when the interval width of the interpolation block wi(s) is smaller than the interpolation interval width A = 2a (refer to Figs. 10 and 11), if t[i] denotes a command point closer to the start point of the W axis path among the two command points that define both ends of the interpolation block wi(s) and t[i + 1] denotes a command point closer to the end point of the W axis path among the two command points and an interval width that is half of the interpolation interval width A is denoted by a, then an interval corresponding to the interpolation block wi(s) is expressed as t[i] < s < t[i +1] and a relationship expressed as t[i] - a < t[i + 1] - a < t[i] + a < t[i + 1] + a holds true. The primary differential wi'(s) of the intervening variable s of the interpolation block wi(s) is depicted by bold lines in Figs. 10 and 11.

In this case, the post-interpolation function qi'(s) obtained by the interpolation processing is subdivided into a function qi21'(s) of an interval expressed as t[i] - a < s < t[i + 1] - a, a function qi22'(s) of an interval expressed as t[i + 1] - a < s < t[i] + a, and a function qi23'(s) of an interval expressed as t[i] + a < s < t[i + 1] + a.

The function qi21'(s) of the interval t[i] - a < s < t[i + 1] - a is represented by Expression (13) below.

$$qi21'(s) = \int_{S=t[i]}^{S=s+a} (wi'(S) \cdot f(s-S)) dS \quad \cdots (13)$$

The function qi22'(s) of the interval t[i + 1] - a < s < t[i] + a is represented by Expression (14) below.

$$qi22'(s) = \int_{S=t[i]}^{S=t[i+1]} (wi'(S) \cdot f(s-S)) dS \quad \cdots (14)$$

The function qi23'(s) of the interval t[i] + a < s < t[i + 1] + a is represented by Expression (15) below.

$$qi23'(s) = \int_{S=s-a}^{S=t[i+1]} (wi'(S) \cdot f(s-S))dS \quad \cdots (15)$$

Next, the transfer axis path local interpolation unit 16c adds the obtained post-interpolation function to the post-interpolation integrated function stored in the memory 5 (step S30). In this case, since the obtained post-interpolation function is added to the post-interpolation integrated function that has been set to zero in step S24, the post-interpolation integrated function after addition is equal to the post-interpolation function obtained in step S28.

Subsequently, the transfer axis path local interpolation unit 16c determines whether or not interpolation processing involving obtaining a post-interpolation function and adding the post-interpolation function to the post-interpolation integrated function has been performed for all interpolation blocks having at least a part of an interval included in the adjustment interval (step S32). At this point, when the transfer axis path local interpolation unit 16c determines that the interpolation processing of all interpolation blocks has not yet been completed, the transfer axis path local interpolation unit 16c returns to step S26 and extracts an interpolation block on which interpolation processing is next performed. The interpolation block extracted at this point is a command block adjacent on a side of the end point of the W axis path to an interpolation block previously subjected to interpolation processing among command blocks having at least a part of an interval included in the adjustment interval. Subsequently, the transfer axis path local interpolation unit 16c performs the calculation of the post-interpolation function of step S28 with respect to the extracted interpolation block and adds the obtained post-interpolation function to the post-interpolation integrated function. The transfer axis path local interpolation unit 16c performs the processes of steps S26 to S30 until it is determined in step S32 that the interpolation processing (distribution, integration, and addition) of all interpolation blocks having at least a part thereof included in the adjustment interval has been completed.

In addition, when the transfer axis path local interpolation unit 16c determines in step S32 that the interpolation processing of all interpolation blocks having at least a part thereof included in the adjustment interval has been completed, the transfer axis path local interpolation unit 16c next obtains an error-having interpolation path with respect to the W axis (step S34). Specifically, the transfer axis path local interpolation unit 16c obtains an error-having interpolation path by extracting an interval from the post-interpolation integrated function obtained by adding the post-interpolation function, the interval corresponding to the interpolation interval extracted in step S20.

Subsequently, the transfer axis path error correction unit 16d obtains an error correction path for correcting errors from the W axis path at a point corresponding to a start point of the interpolation interval and a point corresponding to an end point of the interpolation interval among the error-having interpolation path (step S36). Specifically, the transfer axis path error correction unit 16d obtains an error correction path satisfying a condition that a value of the error correction path at the start point of the interpolation interval is equal to a value obtained by subtracting a value of the W axis path at the start point from a value of the error-having interpolation path at the start point and a value of the error correction path at the end point of the interpolation interval is equal to a value obtained by subtracting a value of the W axis path at the end point from a value of the error-having interpolation path at the end point. More specifically, if the error correction path is denoted by E(s), the error-having interpolation path is denoted by r(s), the W axis path is denoted by w(s), the start point of the interpolation interval is denoted by Ss, and the end point of the interpolation interval is denoted by Se, then the transfer axis path error correction unit 16d obtains the error correction path Ep(s) satisfying Expressions (16) and (17) below. In the present embodiment, the transfer axis path error correction unit 16d obtains an error correction path which connects Ep(Ss) and Ep(Se) by a straight line as an example of the error correction path Ep(s) satisfying these conditions.

$$Ep(Ss) = r(Ss) - w(Ss) \ldots (16)$$

$$Ep(Se) = r(Se) - w(Se) \ldots (17)$$

Next, the transfer axis path error correction unit 16d corrects the error-having interpolation path with the error correction path obtained in step S36, replaces the interpolation interval of the W axis path with the interpolation path after correction, and sets the interpolation path after correction as the W axis path of the interpolation interval after local interpolation (step S38). Specifically, the transfer axis path error correction unit 16d corrects the error-having interpolation path by subtracting the error correction path from the error-having interpolation path, and eliminates, by the correction, an error of the error-having interpolation path with respect to the W axis path at the start point of the interpolation interval and an error of the error-having interpolation path with respect to the W axis path at the end point of the interpolation interval. Therefore, the interpolation path after the correction becomes a path which is continuously connected to the W axis path at the start point of the interpolation interval and which is continuously connected to the W axis path at the end point of the interpolation interval. According to the processes described above, an interpolation interval among the W axis path is locally interpolated so that a variation in a differential value that is discontinuous at an interpolation object point in the interpolation interval becomes a continuous variation.

Subsequently, the transfer axis path local interpolation unit 16c determines whether or not local interpolation of all interpolation intervals of the W axis path has been completed (step S40). At this point, if the transfer axis path local interpolation unit 16c determines that there are interpolation intervals on which local interpolation has not been completed, processes of step S20 and thereafter are repetitively performed. Specifically, the transfer axis path local interpolation unit 16c extracts an interpolation interval positioned closest to the start point of the W axis path among the interpolation intervals on which local interpolation has not been completed, and calculation of a post-interpolation function, addition to a post-interpolation integrated function, derivation of an error-having interpolation path, derivation of an error correction path, correction of the error-having interpolation path, and the like are performed.

On the other hand, when the transfer axis path local interpolation unit 16c determines that the local interpolation of all interpolation intervals of the W axis path has been completed, the process of local interpolation of the W axis path by the transfer axis path local filter 16b is concluded.

In addition, in parallel to the local interpolation processing on the W axis path described above, similar local interpolation processing is performed on the respective coordinate axis paths (the x axis path, the y axis path, and the z axis path) of the tool path after smooth interpolation by the tool path local interpolation unit 15c and the tool path error correction unit of the tool path local filter 15b. In the local interpolation processing of the tool path, when a difference in primary differential values with respect to the intervening variable of the tool path between before and after an interpolation object point differs among the respective coordinate axes that constitute the workpiece coordinate system, the tool path local interpolation unit 15c derives a distributed interval width and an interpolation interval width with respect to a coordinate axis having a maximum difference in primary differential values between before and after an interpolation object point. For example, when the difference in primary differential values with respect to the intervening variable between before and after an interpolation object point of the x axis path is maximum among the primary differential value of the x axis path of the tool path with respect to the intervening variable, the primary differential value of the y axis path of the tool path with respect to the intervening variable, and the primary differential value of the z axis path of the tool path with respect to the intervening variable, the tool path local interpolation unit 15c derives a distributed interval width and an interpolation interval width with respect to the x axis path. Subsequently, using the derived distributed interval width and the interpolation interval width, local interpolation similar to that performed on the W axis path is performed on the x axis path, the y axis path, and the z axis path of the tool path.

After the local interpolation processing described above, the intervening variable time function derivation unit 18 obtains an intervening variable time function representing a variation in the intervening variable with respect to a lapse of a reference time T (step S5 in Fig. 3).

Specifically, the intervening variable time function derivation unit 18 obtains an intervening variable time function (a velocity curve of the intervening variable) based on acceleration/deceleration conditions that includes an allowable acceleration for each transfer axis and is stored in the storage unit 4, the post-interpolation tool path that is the tool path after all interpolation intervals have been locally interpolated, and the post-interpolation W axis path that is the W axis path after all interpolation intervals have been locally interpolated. More specifically, the intervening variable time function derivation unit 18 obtains an intervening variable time function which satisfies a condition that a position of the tip of the tool 106 in the workpiece coordinate system can be moved along the post-interpolation tool path (the x axis path, the y axis path, and the z axis path after interpolation) and the tool 106 can be moved in the W axis direction along the post-interpolation W axis path, and that an acceleration of the transfer object for each transfer axis does not exceed an allowable acceleration with respect to the transfer axis included in the acceleration/deceleration condition. Specifically, the intervening variable time function derivation unit 18 obtains the intervening variable time function as follows.

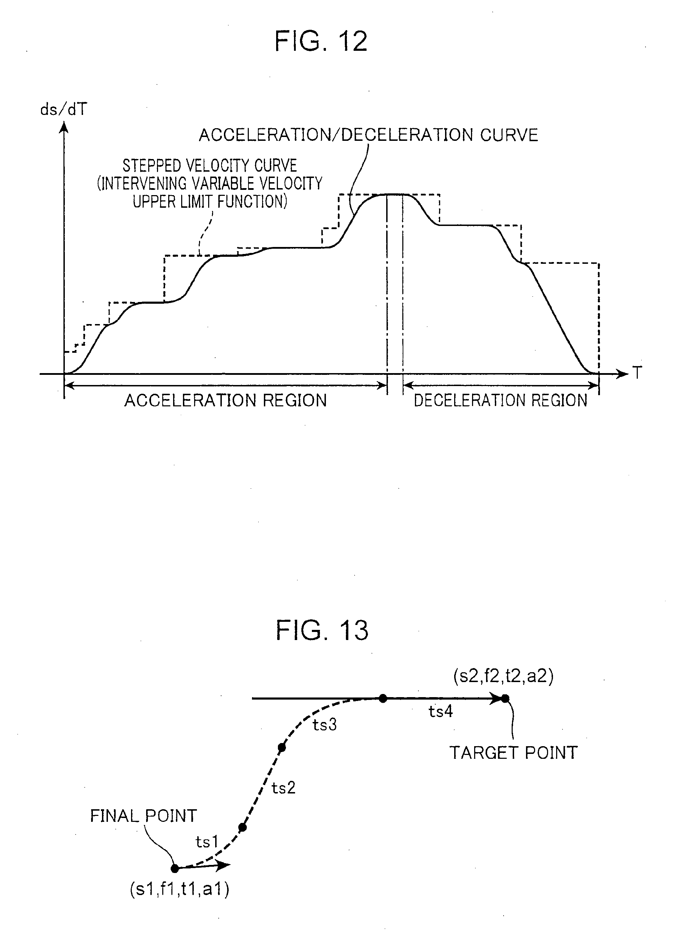

First, the intervening variable time function derivation unit 18 obtains an intervening variable velocity upper limit function that is represented by a stepped velocity curve shown in Fig. 12. The intervening variable velocity upper limit function is a function representing an upper limit value of a velocity $ds/dT$ of the intervening variable $s$ of each block between respective command points on each transfer axis path. Among the stepped velocity curve shown in Fig. 12, each horizontal portion represents a block and a velocity $ds/dT$ of the portion corresponds to an upper limit value of the velocity $ds/dT$ of the intervening variable $s$ of the block. Moreover, while each block is originally set so that increments of the intervening variable $s$ of the respective blocks are equal to one other, the time required to travel a distance corresponding to the increment of the intervening variable $s$ of each block varies. In Fig. 12, an increase in the intervening variable $s$ is converted into a passage of time $t$ and is plotted on a horizontal axis. In addition, the intervening variable time function derivation unit 18 obtains the intervening variable velocity upper limit function by obtaining an upper limit value of the velocity ds/dT of the intervening variable s of each block as follows.

Based on the post-interpolation tool path and the post-interpolation W axis path, the intervening variable time function derivation unit 18 obtains a transfer axis coordinate kp[i] [] (i = 0, 1, 2, 3, 4) of each transfer axis at a total of five points ($s_a$ - 2e, $s_a$ - e, $s_a$, $s_a$ + e, $s_a$ + 2e) including a point of a prescribed intervening variable $s_a$ corresponding to a target block and two preceding points and two following points in a vicinity of the point of the prescribed intervening variable $s_a$. At this point, the Z axis coordinate is obtained by subtracting the W axis coordinate of the post-interpolation W axis path from the z axis coordinate of the z axis path after interpolation. Moreover, e denotes a parameter representing a minute distance in the intervening variable. In addition, i = 0 corresponds to the point ($s_a$ - 2e), i = 1 corresponds to the point ($s_a$ - e), i = 2 corresponds to the point $s_a$, i = 3 corresponds to the point ($s_a$ + e), and i = 4 corresponds to the point ($s_a$ + 2e). Furthermore, [] indicates a value with respect to each transfer axis subsequently, the intervening variable time function derivation unit 18 obtains an approximated value ds1[ax] of a primary differential value of the intervening variable at the point ($s_a$ - e) according to Expression (18) below, obtains an approximated value ds2 [ax] of a primary differential value of the intervening variable at the point ($s_a$ + e) according to Expression (19) below, and obtains an approximated value ddss[ax] of a secondary differential value of the intervening variable of the transfer axis path at a point corresponding to the intervening variable $s_a$ using the two obtained approximated values ds1[ax] and ds2[ax] and Expression (20) below. Moreover, ax is an index representing each transfer axis.

$$ds1[ax] = (kp[2][ax] - kp[0][ax])/2e \ldots (18)$$

$$ds2[ax] = (kp[4][ax] - kp[2][ax])/2e \ldots (19)$$

$$ddss[ax] = (ds2[ax] - ds1[ax])/2e \ldots (20)$$

Supposing that the point of the intervening variable $s_a$ is passed at a uniform velocity v, an acceleration a[] for each transfer axis can be approximated by $v^2$ x ddss[]. Therefore, if an allowable acceleration for each transfer axis among the acceleration/deceleration conditions stored in the storage unit 4 is denoted by A[], then the intervening variable time function derivation unit 18 obtains a velocity upper limit value vm of a target block according to Expression (21) below.

$$vm = (A[ax]/ddss[ax])^{1/2} \ldots (21)$$

In addition, the intervening variable time function derivation unit 18 sets, as an upper limit of the velocity ds/dT of the intervening variable s of the block, a lowest value among the velocity upper limit value vm of a corresponding block for each transfer axis obtained as described above and a velocity corresponding to the block among velocity commands included in the machining program. The intervening variable time function derivation unit 18 respectively obtains an upper limit value of the velocity ds/dT of the intervening variable s of all blocks according to the method described above and obtains an intervening variable velocity upper limit function by connecting the obtained upper limit values of the respective blocks.

Next, the intervening variable time function derivation unit 18 obtains an acceleration/deceleration curve ds(T)/dT, which continuously varies so as not to exceed the stepped velocity curve represented by the intervening variable velocity upper limit function, based on an allowable velocity, an allowable acceleration, and an allowable jerk of the intervening variable s included in the acceleration/deceleration conditions stored in the storage unit 4, and calculates an intervening variable time function s(T) by integrating the obtained acceleration/deceleration curve ds(T)/dT by the reference time T.

Specifically, first, the intervening variable time function derivation unit 18 sequentially obtains, and resisters in the memory 5, a velocity curve (velocity function) of an acceleration region among the acceleration/deceleration curve ds(T)/dT from a start point side to an end point side for each prescribed time interval together with a time interval width ts of the time interval. At this point, the intervening variable time function derivation unit 18 obtains a velocity curve for each time interval together with a time interval width ts of the interval, the velocity curve being a velocity curve in which, during a process of reaching an end point of a block set as a target point (s2, f2) from a final point (s1, f1, t1) of a velocity curve previously registered in the memory 5, a velocity f1 at the final point may increase to an upper limit value (velocity upper limit value f2) of the velocity ds/dT of the block. Moreover, a form of the velocity curve obtained at this time differs according to conditions such as a difference (s2 - s1) in intervening variables between the final point and the target point, the velocity f1 at the final point, the velocity upper limit value f2, an acceleration a1 at the final point, an allowable acceleration, and an allowable jerk. Methods of obtaining a velocity curve in according to the respective conditions are shown in Figs. 13 to 19.

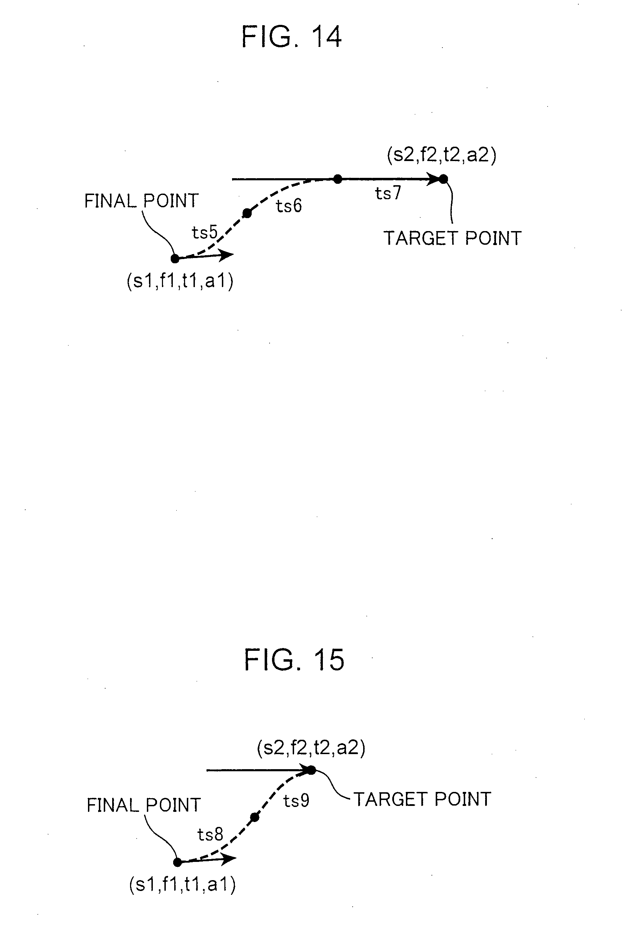

Figs. 13 and 14 show a case where the velocity reaches the velocity upper limit value f2 before reaching the target point (s2, f2) from the final point (s1, f1, t1). Moreover, t2 denotes a time upon reaching s2. Specifically, Fig. 13 shows a velocity curve with a shape in which the velocity is increased from f1 so that the acceleration increases from a1 to the allowable acceleration from the final point (s1, f1, t1) in accordance with the allowable jerk (time interval ts1), the velocity subsequently increases at an acceleration equal to the allowable acceleration (time interval ts2), the acceleration is subsequently decreased in accordance with the allowable jerk so that the velocity does not exceed the velocity upper limit value f2 and the velocity reaches the velocity upper limit value f2 (time interval ts3), and the target point (s2, f2) is subsequently reached at a velocity equal to the velocity upper limit value f2 (time interval ts4). The intervening variable time function derivation unit 18 calculates a velocity curve (velocity function) for each time interval together with time interval widths ts1 to ts4 of each interval according to such conditions and registers the calculated velocity curves together with the corresponding time intervals in the memory 5. In addition, Fig. 14 shows a velocity curve with a shape in which the velocity is increased from f1 so that the acceleration increases from a1 from the final point (s1, f1, t1) in accordance with the allowable jerk (time interval ts5), but since the velocity upper limit value f2 is close, the acceleration is decreased in accordance with the allowable jerk before the allowable acceleration is reached and the velocity reaches the velocity upper limit value f2 (time interval ts6), and the target point (s2, f2) is subsequently reached at a velocity equal to the velocity upper limit value f2 (time interval ts7). The intervening variable time function derivation unit 18 calculates a velocity curve (velocity function) for each time interval together with time interval widths ts5 to ts7 of each interval according to such conditions and registers the calculated velocity curves together with the corresponding time intervals in the memory 5.

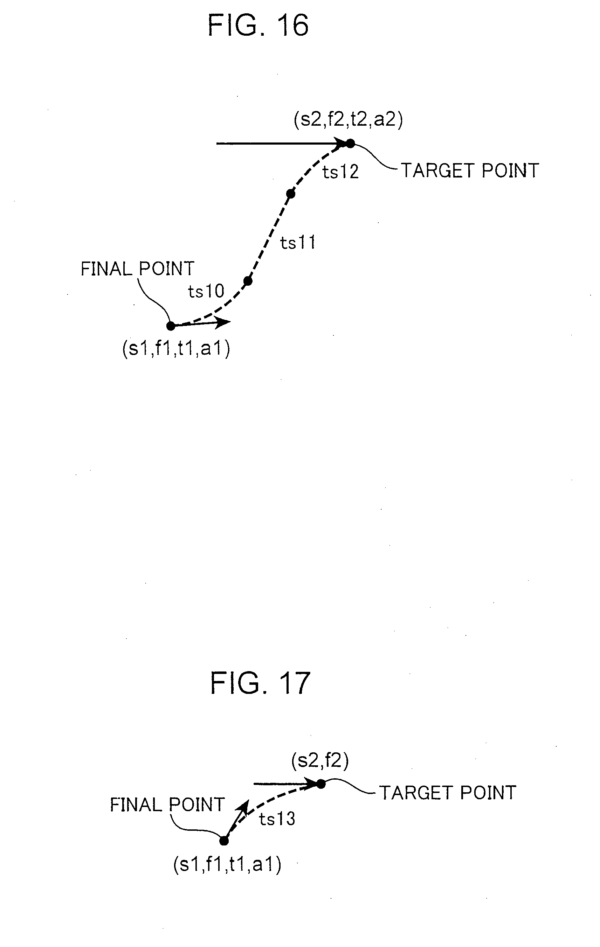

Moreover, Figs. 15 to 17 show cases where the target point (s2, f2) is reached while acceleration is decreasing in accordance with the allowable jerk. Specifically, Fig. 15 shows a velocity curve with a shape in which the velocity is increased from f1 so that the acceleration increases from a1 from the final point (s1, f1, t1) in accordance with the allowable jerk (time interval ts8), but since a distance (s2 - s1) from the final point to the target point (s2, f2) is short, the acceleration is decreased in accordance with the allowable jerk and the velocity reaches the velocity upper limit value f2 and the target point (s2, f2) is reached before the velocity reaches the allowable acceleration (time interval ts9). The intervening variable time function derivation unit 18 calculates a velocity curve (velocity function) for each time interval together with time interval widths ts8 and ts9 of each interval according to such conditions and registers the calculated velocity curves together with the corresponding time intervals in the memory 5. In addition, Fig. 16 shows a velocity curve with a shape in which the velocity is increased from f1 so that the acceleration increases from a1 to the allowable acceleration from the final point (s1, f1, t1) in accordance with the allowable jerk (time interval ts10), the velocity subsequently increases at an acceleration equal to the allowable acceleration (time interval ts11), and the target point (s2, f2) is subsequently reached while the acceleration is being decreased in accordance with the allowable jerk so that the velocity does not exceed the velocity upper limit value f2 (time interval ts12). The intervening variable time function derivation unit 18 calculates a velocity curve (velocity function) for each time interval together with time interval widths ts10 to ts12 of each interval according to such conditions and registers the calculated velocity curves together with the corresponding time intervals in the memory 5. Furthermore, Fig. 17 shows a velocity curve with a shape in which, since the final point (s1, f1, t1) and the target point (s2, f2) are extremely close to each other, the velocity f1 at the final point and the velocity upper limit value f2 are extremely close to each other, and the acceleration a1 at the final point is large, the velocity increases from f1 and reaches the velocity upper limit value f2 and the target point (s2, f2) is reached while the acceleration is being decreased from a1 in accordance with the allowable jerk from the final point (time interval ts13). The intervening variable time function derivation unit 18 calculates a velocity curve (velocity function) for the interval together with a time interval width ts13 according to such conditions and registers the calculated velocity curve together with the time interval ts13 in the memory 5.

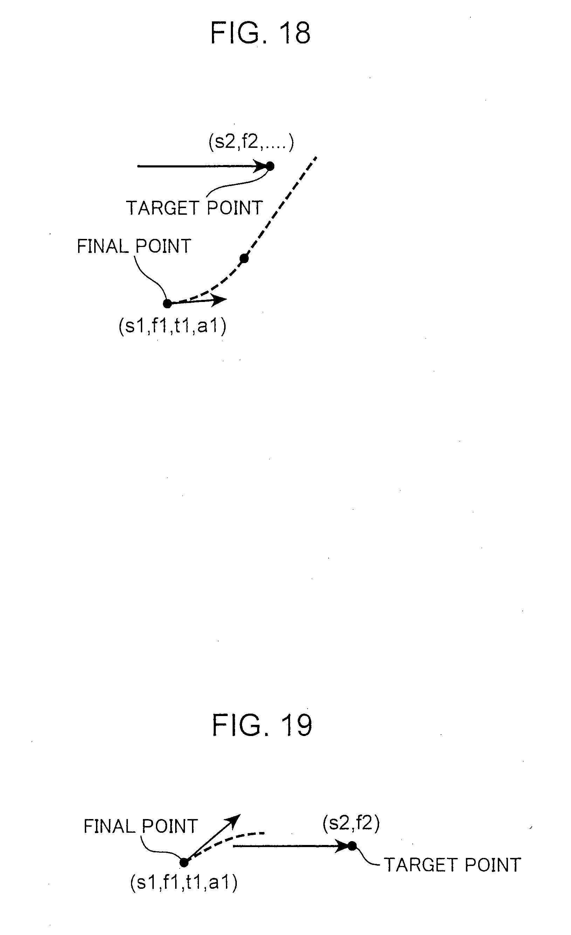

In addition, Fig. 18 shows a case where the velocity cannot be increased to velocity upper limit value f2 even when the intervening variable s reaches a value s2 that corresponds to the target point. When such a case applies upon calculation of a velocity curve by the intervening variable time function derivation unit 18, the intervening variable time function derivation unit 18 does not register the calculated velocity curve in the memory 5.

Furthermore, Fig. 19 shows a case where, since the velocity f1 at the final point (s1, f1, t1) and the velocity upper limit value f2 are extremely close to each other and the acceleration a1 at the final point is relatively large, the velocity exceeds the velocity upper limit value f2 even when the acceleration is decreased in accordance with the allowable jerk from the final point (s1, f1, t1). When such a case applies upon calculation of a velocity curve, the intervening variable time function derivation unit 18 erases data of the velocity curve last registered in the memory 5 and performs a recalculation for obtaining a velocity curve between a final point of a velocity curve registered second to last in the memory 5 and a present target point and in which the velocity may reach a velocity upper limit value corresponding to the present target point. Recalculation methods to be used in this case are similar to the methods in the respective cases described above.

In addition, the intervening variable time function derivation unit 18 sequentially performs calculation and registration of a velocity curve as described above. When registering an obtained velocity curve in the memory 5, the intervening variable time function derivation unit 18 also registers a time t2 and an acceleration a2 of the time of arrival at the target point in the memory 5, and when setting a next target point to calculate a velocity curve, a next velocity curve is calculated by using the registered time t2 as time t1 at the final point and using the registered acceleration a2 as acceleration a1 at the final point. Due to a velocity curve obtained until a velocity upper limit value corresponding to a next target point becomes smaller with respect to a velocity of a final point, a velocity curve of an acceleration region among an acceleration/deceleration curve is obtained.

Next, the intervening variable time function derivation unit 18 sequentially performs calculation and registration of a velocity curve similar to those described above from an end point side toward a start point side of a path with respect to a deceleration region among an acceleration/deceleration curve, and obtains a velocity curve of the deceleration region. In addition, the intervening variable time function derivation unit 18 obtains an acceleration/deceleration curve ds(T)/dT by connecting an end point of the obtained velocity curve of the acceleration region and a start point of the obtained velocity curve of the deceleration region. Furthermore, the intervening variable time function derivation unit 18 calculates an intervening variable time function s(T) by integrating the obtained acceleration/deceleration curve ds(T)/dT by reference time T.

Next, derivation of reference time T and pulse interpolation by the pulse interpolation unit 22 and pulse output to the respective transfer units 102c, 110b, 112b, 114b, 116b, and 118b by the control unit 24 are performed (step S6).

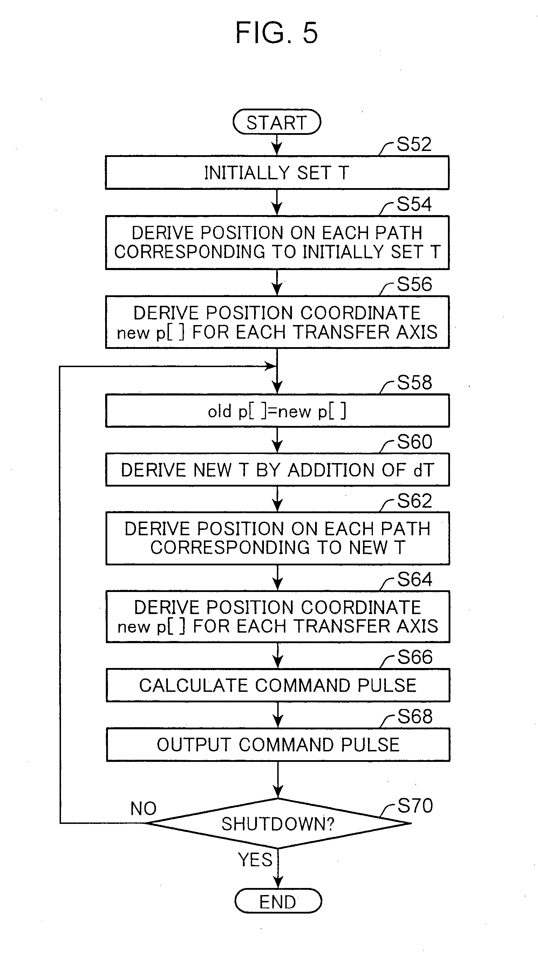

A detailed process of step S6 is shown in the flow chart of Fig. 5. In this process, first, the pulse interpolation unit 22 initially sets the reference time T so that the reference time T conforms to a time that is a start point of the intervening variable time function obtained in step S5 (step S52 in Fig. 5).

Next, the pulse interpolation unit 22 obtains a position coordinate on each coordinate axis of the post-interpolation tool path corresponding to the initially set reference time T and a position coordinate on the post-interpolation W axis path corresponding to the reference time T (step S54). Specifically, the pulse interpolation unit 22 obtains an intervening variable s corresponding to the initially set reference time T from the intervening variable time function s(T) obtained by the intervening variable time function derivation unit 18, obtains a position coordinate on each coordinate axis of the post-interpolation tool path (the x axis path, the y axis path, and the z axis path after interpolation) corresponding to the obtained intervening variable s from the obtained intervening variable s and the post-interpolation tool path, and obtains a position coordinate on the post-interpolation W axis path corresponding to the obtained intervening variable s from the obtained intervening variable s and the post-interpolation W axis path.

Next, the pulse interpolation unit 22 sets, as a constraint, the obtained position coordinate on the W axis on the W axis path, and based on a relational expression representing a correlation between a position coordinate of the tip point of the tool 106 in the workpiece coordinate system and a position coordinate on each transfer axis, obtains a position coordinate on each transfer axis corresponding to the position coordinate on each coordinate axis of the post-interpolation tool path and the position coordinate on the post-interpolation W axis path which are obtained in step S54 (step S56).

Specifically, the pulse interpolation unit 22 first obtains a position coordinate (Tx, Ty, Tz) in a workpiece coordinate system of the tip point of the tool 106 represented by the post-interpolation tool path, and obtains a tool axis vector (Si, Sj, Sk) and a coordinate (Sx, Sy, Sz) of a main shaft position based on the obtained position coordinate, and a coordinate a of the A axis path and a coordinate c of the C axis path which have constant values of 0 according to Expressions (22) to (27) below. Moreover, the main shaft position refers to a position in a workpiece coordinate system of a base end (an end opposite to the tip) of the tool 106 that is held by the main shaft head 108. In addition, the tool axis vector is a vector which expresses an axial direction of the tool 106 (a direction in which a center line of the tool 106 extends) by a workpiece coordinate system and which extends from the tip point of the tool 106 to the base end (main shaft position) of the tool 106.

$$Si = \sin(a) \times \sin(c) \dots (22)$$

$$Sj = -\sin(a) \times \cos(c) \dots (23)$$

$$Sk = \cos(a) \cdot\cdot\cdot (24)$$

$$Sx = Tx + length \times Si \dots (25)$$

$$Sy = Ty + length \times Sj \dots (26)$$

$$Sz = Tz + length \times Sk \dots (27),$$

where length denotes a length of the tool 106 in an axial direction thereof.

Subsequently, the pulse interpolation unit 22 calculates a position coordinate w on the W axis from the post-interpolation W axis path, and then obtains a position coordinate (x, y, z) on each transfer axis (the X axis, the Y axis, or the Y axis) corresponding to the position coordinate represented by the post-interpolation tool path and the position coordinate represented by the post-interpolation W axis path based on kinematic relational expressions (28) to (30) below.

$$x = Sx - Tx + Cx \times \cos(c) - (Ay \times \cos(a) - Az \times \sin(a) + Cy - Ay) \times \sin(c) - Cx \dots (28)$$

$$y = Sy - Ty + Cx \times \sin(c) + (Ay \times \cos(a) - Az \times \sin(a) + Cy - Ay) \times \cos(c) - Cy \dots (29)$$

$$z = Sz - Tz + Ay \times \sin(a) + Az \times \cos(a) - Az - w \dots (30)$$

In these expressions, Ay denotes a Y axis component and Az denotes a Z axis component of a vector from a point positioned on a central line of the tool 106 among the tip of the tool 106 toward a center of swinging of the swinging support 110a on a YZ plane. In addition, Cx denotes an X axis component and Cy denotes a Y axis component of a vector from a point (the tip point of the tool 106) positioned on a central line of the tool 106 among the tip of the tool 106 toward a center of rotation of the rotating support 112a on an XY plane. Moreover, Expressions (22) to (30) are included in a concept of a specific relational expression according to the present invention. In addition, although the Z axis and the W axis are indeterminate axes that are parallel to each other and values of z and w are not uniquely determined by Expression (30) alone, by using the constraint that sets, as w, a position coordinate on the W axis of the post-interpolation W axis path obtained in step S54, a value of z can be obtained from Expression (30). A position coordinate on each transfer axis obtained by the pulse interpolation unit 22 as described above is to be denoted by newp [].

Next, the pulse interpolation unit 22 sets the position coordinate newp [] for each transfer axis obtained in step S56 as an old coordinate oldp [] (step S58).

Next, the pulse interpolation unit 22 adds the reference unit time dT to the reference time T initially set in step S52 to obtain a new reference time T (step S60).

Next, the pulse interpolation unit 22 obtains a position coordinate on each coordinate axis of the post-interpolation tool path and a position coordinate on the W axis of the post-interpolation W axis path corresponding to the new reference time T in a similar manner to step S54 (step S62), and by setting the obtained position coordinate on the W axis as a constraint, obtains a position coordinate on each transfer axis corresponding to the obtained position coordinate on the post-interpolation tool path in a similar manner to step S56 (step S64).

Subsequently, the pulse interpolation unit 22 calculates a command pulse (step S66). Specifically, the pulse interpolation unit 22 subtracts from the position coordinate newp [] for each transfer axis obtained in step S64 a corresponding old coordinate oldp [] for each transfer axis set in step S58 to obtain a variation in the position coordinate on each transfer axis per reference unit time dT or, in other words, a transfer amount per reference unit time dT of the transfer object for each transfer axis, and sets the obtained transfer amount as a command pulse per unit time (per the specific period) of actual time.

Subsequently, the control unit 24 outputs, to the servomotor of each transfer unit 102c, 114b, 116b, or 118b, a command pulse indicating a transfer amount with respect to a transfer axis corresponding to the transfer unit among the command pulses per the specific period obtained by the pulse interpolation unit 22 (step S68). Accordingly, the transfer units 102c, 114b, 116b, and 118b respectively move corresponding supports, which support and move the transfer object, along corresponding transfer axes per the specific period by a transfer amount indicated by the command pulse from the control unit 24. Specifically, the table transfer unit 102c moves the table 102b, the ram transfer unit 114b moves the ram 114a, the saddle transfer unit 116b moves the saddle 116a, and the cross rail transfer unit 118b moves the cross rail 118a along a corresponding transfer axis per the specific period by a transfer amount indicated by the command pulse from the control unit 24.

Next, the pulse interpolation unit 22 determines whether or not shutdown processing is to be performed (step S70). At this point, when the pulse interpolation unit 22 determines that shutdown processing is to be performed, the shutdown processing is performed and the numerical control process according to the present embodiment is concluded. On the other hand, when the pulse interpolation unit 22 determines that shutdown processing is not to be performed, processing of steps S58 and thereafter is repetitively performed. In step S58 that is performed again, the pulse interpolation unit 22 sets the position coordinate newp [] for each transfer axis obtained in step S64 to an old coordinate oldp [].

The control process by the numerical control device 2 according to the present embodiment is performed as described above.

As described above, with the numerical control device 2 according to the present embodiment, since a W axis path obtained from a machining program is interpolated and a position coordinate on the W axis indicated by the W axis path after interpolation is used as a constraint to obtain a position coordinate on each transfer axis corresponding to a position coordinate at each time point at every unit time of a post-interpolation tool path, even if the Z axis and the W axis among all transfer axes are indeterminate axes, a position coordinate at each of the time points on the Z axis and the W axis corresponding to the tool path can be obtained and simultaneous control of the transfer devices 102, 114, 116, and 118 can be performed.

In addition, with the numerical control device 2 according to the present embodiment, even when the machine tool includes the second vertical transfer device 118 which has a low allowable acceleration with respect to the W axis or, in other words, which is slow-moving with respect to the W axis, since the slow movement is compensated by transfer of the tool 106 along the Z axis by the first vertical transfer device 114 which has a high allowable acceleration, speedy and highly accurate machining control can be realized without being governed by the low allowable acceleration of the second vertical transfer device 118 with respect to the W axis. Specifically, in the present embodiment, since the W axis path is first locally interpolated so that a secondary differential value of the W axis path with respect to an intervening variable becomes smaller and the W axis path is then interpolated so that a velocity variation of the tool 106 (the cross rail 118a) along the W axis becomes gradual, and a position coordinate on each transfer axis is obtained by setting, as a constraint, a position coordinate at each time point on the W axis represented by the W axis path after interpolation, while a movement of the tool 106 (the cross rail 118a) along the W axis can be made gradual so that an acceleration of the movement is within a low allowable acceleration, a rapid movement of the tool 106 can be instructed on the Z axis as though to compensate for the gradual movement of the tool 106 (the cross rail 118a) along the W axis. Therefore, with respect to the first vertical transfer device 114 with favorable acceleration performance, control to compensate for the poor acceleration performance of the second vertical transfer device 118 or, in other words, control for quickly transferring the tool 106 along the Z axis as though to compensate for the poor acceleration performance of the second vertical transfer device 118 is performed. Therefore, even if the acceleration performance of the second vertical transfer device 118 is significantly poor, the machining velocity of the workpiece 100 can be prevented from being affected by the significantly poor acceleration performance and the machine tool can be enabled to perform machining of the workpiece 100 at high velocity. In addition, in the present embodiment, since a position coordinate of each time point on the W axis of the post-interpolation W axis path is set as a constraint to obtain a position coordinate of each time point on other transfer axes, a position coordinate having absorbed a positional error created by interpolating the W axis path is obtained as a position coordinate on the Z axis including a coordinate axis component (z axis component) of the same workpiece coordinate system as the W axis. Therefore, during machining of the workpiece 100, a positional error created by interpolation of the W axis path is not reflected in a movement of the tool 106. As a result, the machine tool can be enabled to perform machining of the workpiece 100 at high machining accuracy.

Moreover, in the present embodiment, the allowable error with respect to the W axis that is used by the transfer axis path local interpolation unit 16c for calculating a distributed interval width may be set to an error that is greater than an allowable error of a position on the z axis of the tool path in a workpiece coordinate system. Accordingly, a post-interpolation function obtained by distribution of a primary differential value with respect to an intervening variable and subsequent integration traces a more gradual curve and, as a result, the second vertical transfer device 118 with poor acceleration performance can be operated extremely gradually and mechanical shock can be further reduced. In addition, even if the allowable error with respect to the W axis is increased to make the movement of the second vertical transfer device 118 extremely gradual, the extremely gradual movement can be compensated by a speedy movement of the tool 106 on the Z axis due to the first vertical transfer device 114 with good acceleration performance and, at the same time, a positional error with respect to the W axis can be absorbed by the transfer of the tool 106 on the Z axis by the first vertical transfer device 114 and high machining accuracy can be retained.

In addition, in the present embodiment, a machining program including a locus of a position coordinate of a specific point on the W axis in addition to information on position coordinates of a plurality of command points through which the tool 106 is to pass during machining of the work and a tool transfer velocity command is stored in the storage unit 4, the transfer axis path derivation unit 34 obtains a W axis path from a locus of the position coordinate of the specific point on the W axis and the tool transfer velocity command that are included in the machining program, and processing for controlling subsequent operations of the second vertical transfer device 118 is performed based on the W axis path. Therefore, in the present embodiment, when the machining program is being created, a behavior of transfer of the tool 106 along the W axis by the second vertical transfer device 114 with poor acceleration performance can be arbitrarily set.

The embodiment disclosed herein should be considered in all respects illustrative and not restrictive. It is intended that the scope of the present invention be defined not by the description of the embodiment given above but rather by the claims appended hereto, and that the scope of the invention include equivalents thereof and all modifications made therein.

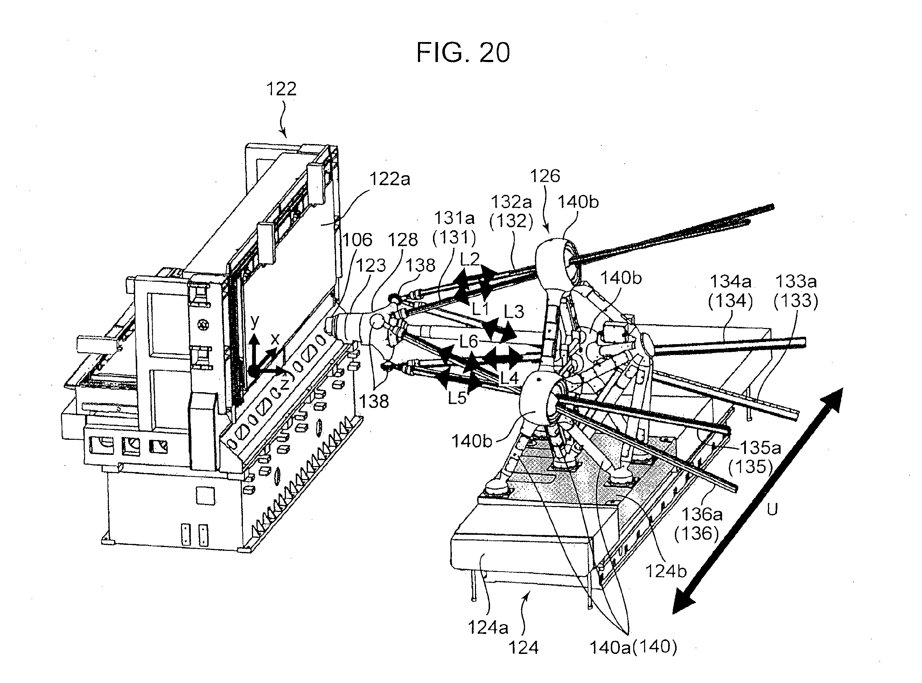

For example, the numerical control device according to the present invention can also be applied to various types of machine tools that differ from the machine tool described in the embodiment above. Fig. 20 shows an example of a machine tool to which a numerical control device according to a modification of an embodiment of the present invention is applied.

This machine tool is a machine tool including a parallel link mechanism 126. In the machine tool, L1 to L6 axes with which respective tool transfer devices 131 to 136 that constitute the parallel link mechanism 126 transfer a tool 106 and a U axis with which a horizontal transfer device 124 transfers the entire parallel link mechanism 126 in a horizontal direction include an x axis component of a workpiece coordinate system that is a common coordinate axis component and are indeterminate axes whose coordinates are not uniquely determined with respect to the x axis coordinate.

Specifically, the machine tool includes a workpiece support device 122, the tool 106, a main shaft head 123, the horizontal transfer device 124, the parallel link mechanism 126, and a control panel (not shown).

The workpiece support device 122 is a device for supporting a workpiece (not shown) and is installed at a prescribed installation location. The workpiece support device 122 has a support surface 122a that is a vertical surface and supports a workpiece in a state where the workpiece is in contact with the support surface 122a. A workpiece coordinate system is set on a workpiece placed on the workpiece support device 122. Specifically, a workpiece coordinate system constituted by an x axis, a y axis and a z axis is set on the workpiece, the x axis being parallel to the support surface 122a in a horizontal plane, the y axis being perpendicular to the support surface 122a in the horizontal plane, the z axis being perpendicular to both the x axis and the y axis.

The main shaft head 123 holds the tool 106 and rotates the tool 106 around an axis thereof in a similar manner to the embodiment described above.

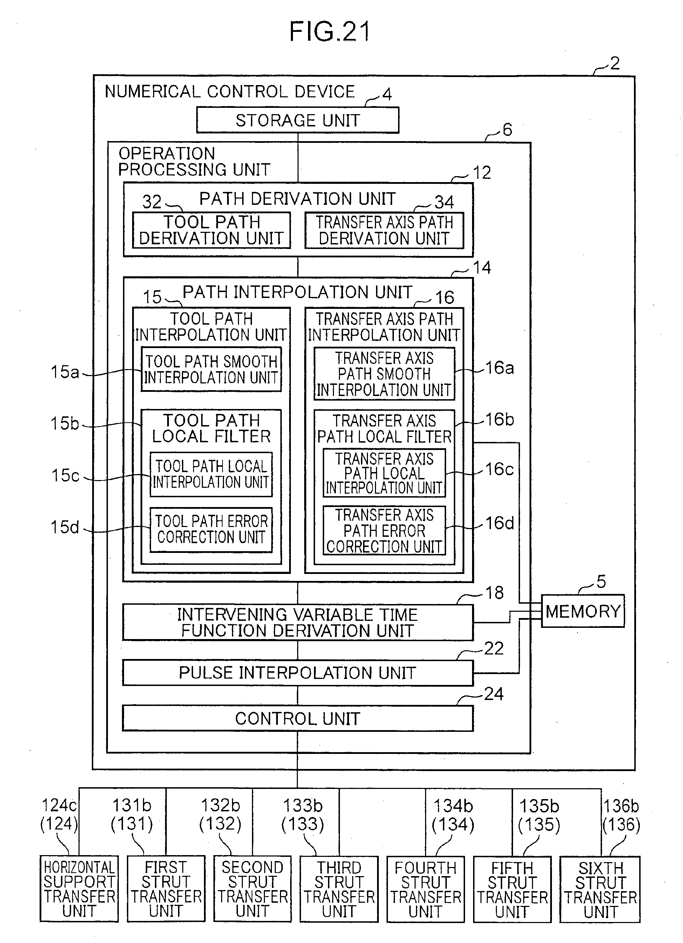

The horizontal transfer device 124 transfers the entire parallel link mechanism 126 in a direction parallel to the support surface 122a of the workpiece support device 122 in a horizontal plane or, in other words, along a U axis that extends in a direction parallel to the x axis of the workpiece coordinate system and, accordingly, transfers the tool 106 along the U axis. Moreover, the horizontal transfer device 124 is included in a concept of a transfer device and a second transfer device according to the present invention and the U axis is included in a concept of a transfer axis and a second transfer axis according to the present invention. The horizontal transfer device 124 is a transfer device with a poorest acceleration performance among all transfer devices provided in the machine tool, and allowable acceleration with respect to the U axis is set to a value that is lower than allowable acceleration with respect to the other transfer axes. In addition, the horizontal transfer device 124 includes a base 124a, a horizontal support 124b, and a horizontal support transfer unit 124c (refer to Fig. 21).

The base 124a is installed at a location separated from the workpiece support device 122 in a direction that is perpendicular to the support surface 122a, and the horizontal support 124b is provided on the base 124a to be movable along the U axis. The horizontal support 124b supports the parallel link mechanism 126 from below. Specifically, a support leg 128a (to be described later) of the parallel link mechanism 126 is installed on an upper surface of the horizontal support 124b. The horizontal support transfer unit 124c transfers the horizontal support 124b along the U axis. The horizontal support transfer unit 124c has a servomotor (not shown) as a drive source and transfers the horizontal support 124b using power generated by the motor.

While the parallel link mechanism 126 moves the tool 106 mounted to the main shaft head 123 in accordance with a locus of a position coordinate of a tip of the tool 106 and a variation of a tool axis vector that are included in a machining program, in the present embodiment, it is assumed that the parallel link mechanism 126 is actuated in a state where the tool axis vector is fixed to (0, 0, 1) in a workpiece coordinate system (x, y, z). The parallel link mechanism 126 includes a head support unit 128, a plurality of tool transfer devices 131 to 136, a tip joint 138, and a strut support mechanism 140.

The head support unit 128 supports the main shaft head 123.

The first to sixth tool transfer devices 131 to 136 respectively move the main shaft head 123 along L1 to L6 axes which are respective transfer axes for the tool transfer devices 131 to 136 in order to move the tool 106 in directions of the L1 to L6 axes. The first to sixth tool transfer devices 131 to 136 are respectively included in a concept of a transfer device and a first transfer device according to the present invention and the L1 to L6 axes are respectively included in a concept of a first transfer axis according to the present invention. The first tool transfer device 131 includes a first strut 131a and a first strut transfer unit 131 b, and the second tool transfer device 132 includes a second strut 132a and a second strut transfer unit 132b. The third tool transfer device 133 includes a third strut 133a and a third strut transfer unit 133b, and the fourth tool transfer device 134 includes a fourth strut 134a and a fourth strut transfer unit 134b. In addition, the fifth tool transfer device 135 includes a fifth strut 135a and a fifth strut transfer unit 135b, and the sixth tool transfer device 136 includes a sixth strut 136a and a sixth strut transfer unit 136b.

The first to sixth struts 131a to 136a are respectively formed in a rod shape extending in one direction. One end of each strut 131 a to 136a is connected to a base end side (a side opposite to a side supporting the main shaft head 123) of the head support unit 128 via the tip joint 138 so as to be capable of joint transfer and, accordingly, supports the head support unit 128. Each strut 131a to 136a is supported by the strut support mechanism 140 to be movable along an L axis that extends in a longitudinal direction of each strut 131a to 136a. The strut support mechanism 140 is installed on the horizontal support 124b of the horizontal transfer device 124. The strut support mechanism 140 respectively supports the struts 131a to 136a so that a side of one end of the struts 131a to 136a, which support the head support unit 128, protrude toward the side of the workpiece support device 122 from above the horizontal support 124b.

The strut support mechanism 140 includes a support leg 140a installed on the horizontal support 124b and strut support units 140b supported by the support leg 140a. The strut support units 140b are disposed at positions of respective apexes of an equilateral triangle when seen from a side of the workpiece support device 122. Each strut support unit 140b supports two of the struts 131a to 136a so that the supported struts are respectively movable in each longitudinal direction (axial direction).

The first to sixth strut transfer units 131b to 136b (refer to Fig. 21) move a corresponding strut among the first to sixth struts 131a to 136a along a corresponding L axis in order to move the tool 106 in a direction of the L axis together with the head support unit 128 and the main shaft head 123. The respective strut transfer units 131b to 136b have a servomotor (not shown) as a drive source and transfer corresponding struts 131a to 136a using power generated by the motor.

The control panel (not shown) is provided to control and operate the respective transfer devices 124c and 131b to 136b, the main shaft head 123, and other transfer units. The numerical control device 2 according to the present modification shown in Fig. 21 is built into the control panel.

The numerical control device 2 according to the present modification includes a storage unit 4, a memory 5, and an operation processing unit 6 similar to those of the numerical control device 2 according to the embodiment described above.

In the present modification, the storage unit 4 stores a machining program that includes a locus of a position coordinate of the tool 106 in a workpiece coordinate system through which the tool 106 is to pass during machining of the workpiece, a tool transfer velocity command that indicates a transfer velocity of the tool 106, and a locus of a position coordinate on the U axis which corresponds to the locus of the position coordinate of the tool 106 in the workpiece coordinate system. Moreover, in the present modification, since a workpiece is machined in a state where a posture of the tool 106 is fixed so that a tool axis vector of the tool 106 is expressed by (0, 0, 1) in the workpiece coordinate system (x, y, z), the machining program does not include a command for varying the posture (incline) of the tool 106. In addition, in the present modification, a transfer axis path derivation unit 34, a transfer axis path smooth interpolation unit 16a, and a transfer axis path local interpolation unit 16c and a transfer axis path error correction unit 16d of a transfer axis path local filter 16b perform processing similar to that performed on the W axis path in the embodiment described above on a U axis path which represents a movement of a specific point on the U axis that is used as a reference when the horizontal transfer device 124 moves the tool 106 together with the parallel link mechanism 126 and the main shaft head 123 during machining of the work by a position coordinate on the U axis and a function of an intervening variable. Moreover, the U axis path is included in a concept of a second transfer axis path according to the present invention. In addition, an intervening variable time function derivation unit 18 derives an intervening variable time function according to a similar method to that of the embodiment described above but by using a post-interpolation U axis path in place of the post-interpolation W axis path.

Furthermore, a pulse interpolation unit 22 obtains an intervening variable corresponding to each time point at every reference unit time of a reference time from the intervening variable time function derived by the intervening variable time function derivation unit 18, and obtains a position coordinate in a workpiece coordinate system of a post-interpolation tool path corresponding to the obtained intervening variable at each time point and a position coordinate on the U axis of a post-interpolation U axis path corresponding to the intervening variable at each time point. Subsequently, the pulse interpolation unit 22 sets the obtained position coordinate on the U axis at each time point as a constraint, and obtains a position coordinate on each transfer axis based on a relational expression representing a correlation between a position coordinate of the tool 106 in a workpiece coordinate system and a position coordinate on each transfer axis.

In doing so, in a similar manner to the embodiment described above, the pulse interpolation unit 22 obtains a coordinate (Sx, Sy, Sz) of a main shaft position and the tool axis vector (0, 0, 1) that is a constant value and, subsequently, based on kinematic relational expressions (31) and (32) below, obtains a position coordinate on each transfer axis (U axis, L1 to L6 axes) corresponding to a position coordinate represented by the post-interpolation tool path and a position coordinate represented by the post-interpolation U axis path. At this point, a position coordinate on each transfer axis (L1 to L6 axes) is obtained using a constraint that the position coordinate on the U axis of the post-interpolation U axis path obtained as described above is set to a value u below. Moreover, the respective position coordinates on the L1 to L6 axes that are obtained at this point are to be denoted by l[i] (i = 0, 1, 2, 3, 4, 5).

$$(l[i] + o[i])^2 + d^2 = (N[j][0] - t[k][0])^2 + (N[j][1] - t[k][1])^2 + (N[j][2] - t[k][2])^2 \dots (31)$$

$$t[k][ii] = (Sx - u, Sy, Sz) + T[k][0] \times m[0][ii] + T[k][0] \times m[1][ii] + T[k][2]) \times m[2][ii]$$

$$\dots (32)$$

In the kinematic relational expressions (31) and (32) above, d denotes a mechanical constant representing a deviation between a center of the strut support unit 140b and an axial center of a strut supported by the strut support unit 140b. In addition, i = 0, 1, 2, 3, 4, 5 and ii = 0, 1, 2 hold true. Furthermore, N[j][0], N[j][1], and N[j][2] denote position coordinates in a workpiece coordinate system of centers of the three strut support units 140b. In addition, T[k][0], T[k][1], and T[k][2] denote position coordinates of the three tip joints 138. Furthermore, o[i] denotes a distance from a point at which each strut 131a to 136a is supported by the strut support unit 140b to a corresponding tip joint 138 on a corresponding L axis. In addition, m[0][], m[1][], and m[2] [] denote cosines of three coordinate axes of a main shaft coordinate system to the workpiece coordinate system, the three coordinate axes being perpendicular to one another, the main shaft coordinate system being set on the head support unit 128 in order to define a posture of the head support unit 128 in a state where a rotational posture of the head support unit 128 around a main shaft (around the axial core of the tool 106) has been restrained. In the present modification, since the tool axis vector is fixed to (0, 0, 1) as described above, a rotation angle α of the main shaft head 123 around an axis parallel to the x axis and a rotation angle β of the main shaft head 123 around an axis parallel to the y axis are fixed to 0. In consideration thereof, m[0][] is represented by Expression (33) below, m[1][] is represented by Expression (34) below, and m[2][] is represented by Expression (35) below.

$$m[0][] = (\cos(\beta), 0, -\sin(\beta)) = (1, 0, 0) \dots (33)$$

$$m[1][] = (\sin(\alpha) \times \sin(\beta), \cos(\alpha), \sin(\alpha) \times \cos(\beta)) = (0, 1, 0) \dots (34)$$

$$m[2][] = (\cos(\alpha) \times \sin(\beta), -\sin(\alpha), \cos(\alpha) \times \cos(\beta)) = (0, 0, 1) \dots (35)$$

In addition, the pulse interpolation unit 22 obtains, in a similar manner to the embodiment described above, a transfer amount per reference unit time for each transfer axis including the U axis and the L1 to L6 axes from the obtained position coordinate of each transfer axis at every reference unit time. Furthermore, the control unit 24 sets the transfer amount as a command pulse, outputs a command pulse with respect to the U axis to the servomotor of the horizontal support transfer unit 124c, and outputs command pulses with respect to the L1 to L6 axes to the servomotors of the respectively corresponding strut transfer units 131b to 136b. Accordingly, the horizontal support transfer unit 124c moves the horizontal support 124b and the first to sixth strut transfer units 131b to 136b move a corresponding strut among the first to sixth struts 131a to 136a along a corresponding transfer axis per specific period by a transfer amount indicated by the command pulse from the control unit 24.

Components and control processes of the numerical control device 2 according to the present modification other than those described above are similar to those of the numerical control device 2 according to the embodiment described earlier.

In the present modification, since a U axis path obtained from the machining program is interpolated and a position coordinate on the U axis indicated by the U axis path after interpolation is used as a constraint to obtain a position coordinate on each transfer axis (on L1 to L6 axes) corresponding to a position coordinate of a post-interpolation tool path at each time point at every unit time, even if the L1 to L6 axes and the U axis are indeterminate axes, a position coordinate at each of the time points on the L1 to L6 axes and the U axis corresponding to the tool path can be obtained and simultaneous control of corresponding transfer devices 131 to 136 and 124 for all transfer axes can be performed. In addition, in the present modification, even when the machine tool includes the horizontal transfer device 124 which has a low allowable acceleration with respect to the U axis or, in other words, which is slow-moving along the U axis, since the slow movement is compensated by movement of the tool 106 that is accompanied with movement of the respective struts along the L1 to L6 axes by the first to sixth tool transfer devices 131 to 136 which have high allowable acceleration, deterioration of the movement of the tool 106 in the x axis direction in the workpiece coordinate system can be prevented and speedy and highly accurate machining control can be realized. Furthermore, in the present modification, since a position coordinate at each time point on the U axis of the post-interpolation U axis path is set as a constraint to obtain a position coordinate at each time point on the L1 to L6 axes, a position coordinate having absorbed a positional error created by interpolating the U axis path is obtained as a position coordinate on the L1 to L6 axes including a same x axis component as the U axis. Therefore, a positional error created by interpolation of the U axis path is not reflected in a movement of the tool 106 during machining of the workpiece and highly accurate machining control can be achieved.

In addition, while a W axis path is obtained by the transfer axis path derivation unit 34 based on a locus of a position coordinate of a specific point on the W axis and a tool transfer velocity command which are included in a machining program in the embodiment described above, a configuration for deriving a W axis path is not limited to this configuration. For example, the transfer axis path derivation unit 34 may derive a W axis path based on a specific derivation rule from a tool path derived by the tool path derivation unit 32. In this case, a specific derivation rule refers to a rule in which a value obtained by multiplying a z axis coordinate, that is indicated by a tool path, by a specific ratio (for example, 1/2) is set as the W axis coordinate of the W axis path.

According to this configuration, by simply storing a machining program that includes information on position coordinates of a plurality of command points through which a tip point of the tool 106 is to pass during machining of the workpiece and a tool transfer velocity command in the storage unit 4, after the tool path derivation unit 32 derives a tool path from the machining program, the transfer axis path derivation unit 34 automatically derives a W axis path from the tool path. Therefore, there is no need to specify a locus of a position coordinate of a specific point on the W axis in the machining program and the machining program can be simplified.

In addition, in a similar manner, the transfer axis path derivation unit 34 may derive a U axis path based on a specific derivation rule from the tool path derived by the tool path derivation unit 32 in the modification described above. In this case, a specific derivation rule refers to a rule in which, for example, an x axis coordinate indicated by the tool path is to be used as-is as a U axis coordinate of the U axis path. Moreover, as the derivation rule, a rule may be adopted in which a value obtained by multiplying the x axis coordinate, that is indicated by the tool path, by a specific ratio is set as the U axis coordinate of the U axis path.

Furthermore, the numerical control device according to the present invention can also be applied to various types of machine tools other than the machine tools presented in the embodiment and the modification described above. When the numerical control device according to the present invention is applied to machine tools other than those presented in the embodiment and the modification described above, the first transfer axis and the second transfer axis are not limited to transfer axes that are parallel to each other and need only be transfer axes including a same specific coordinate axis component in a workpiece coordinate system.

Furthermore, a method of deriving a distributed interval width and an interpolation interval width used by the tool path local filter 15b and the transfer axis path local filter 16b is not limited to the method described above and a distributed interval width and an interpolation interval width may be obtained by various derivation methods other than that described above. In addition, while the interpolation interval width is set to an interval width that is equal in size to the distributed interval width in the embodiment, the interpolation interval width is not limited to this interval width. In other words, the interpolation interval width may be an interval width greater than the distributed interval width.

In addition, the distribution function used when distributing a primary differential value of a tool path is not limited to the bell-like distribution function described above and distribution may be performed by various distribution functions other than a bell-like distribution function.

Furthermore, local interpolation of a tool path need not necessarily be performed so that a secondary differential value with respect to an intervening variable becomes continuous at an interpolation object point in an interpolation interval. For example, an interpolation interval of a tool path may be locally interpolated in a state where a primary differential value with respect to an intervening variable is continuous but a secondary differential value with respect to the intervening variable remains discontinuous at an interpolation object point in the interpolation interval.

In addition, when intervals in which the secondary differential value with respect to the intervening variable exceeds an upper limit value exist consecutively for a certain interval in a path after smooth interpolation, an interval obtained by expanding a distributed interval by the certain interval may be adopted as an interpolation interval.

Furthermore, while an example in which a machining program includes information on position coordinates in a workpiece coordinate system of command points through which a tip point of a tool is to pass and information on a tool axis vector corresponding to the command points has been described in the embodiment above, the respective command points included in the machining program may be constituted by position coordinates through which a tip point of a tool is to pass and A axis coordinates and C axis coordinates which define a posture of the tool.

[Summary of Embodiment]

The embodiment may be summarized as follows.

A numerical control device according to the embodiment described above is a numerical control device provided in a machine tool including a plurality of transfer devices which move a transfer object which is a workpiece or a tool for machining the workpiece along a plurality of transfer axes in order to machine the workpiece, the plurality of transfer axes including a first transfer axis and a second transfer axis which respectively include a specific coordinate axis component in a workpiece coordinate system set on the workpiece and which are indeterminate axes whose coordinates are not uniquely determined with respect to a coordinate on the specific coordinate axis, the plurality of transfer devices including a first transfer device which moves the transfer object along the first transfer axis and a second transfer device which moves the transfer object along the second transfer axis, an allowable acceleration of transfer of the transfer object along the second transfer axis by the second transfer device being lower than an allowable acceleration of transfer of the transfer object along the first transfer axis by the first transfer device, and the numerical control device numerically controlling the respective transfer devices by outputting a command pulse per specific period to the respective transfer devices, the numerical control device comprising: a storage unit which stores a machining program which instructs machining of the workpiece; a path derivation unit which reads the machining program stored in the storage unit, and which obtains a tool path and a second transfer axis path based on the machining program which has been read, the tool path including a function which expresses a movement of the tool during machining of the workpiece by a position coordinate of the tool in the workpiece coordinate system and an intervening variable which is an integrated length of a locus of the movement of the tool, the second transfer axis path expressing a movement of a specific point on the second transfer axis as a function of a position coordinate of the specific point on the second transfer axis and the intervening variable, the specific point being to be used as a reference when the second transfer device moves the transfer object during machining of the workpiece; a tool path interpolation unit which interpolates the tool path obtained by the path derivation unit so that a movement of the tool expressed by the tool path becomes smooth; a second transfer axis path interpolation unit which performs smooth interpolation and local interpolation, the smooth interpolation being an interpolation in which the second transfer axis path obtained by the path derivation unit is interpolated so that a movement of the specific point on the second transfer axis becomes smooth, the movement of the specific point being expressed by the second transfer axis path, the local interpolation being an interpolation in which the second transfer axis path after the smooth interpolation is interpolated so that a secondary differential value with respect to the intervening variable of the second transfer axis path after smooth interpolation becomes smaller; an intervening variable time function derivation unit which obtains an intervening variable time function expressing a variation in the intervening variable with respect to a lapse of a reference time, based on an acceleration/deceleration condition including an allowable acceleration of transfer of the transfer object for each transfer axis when the transfer object is moved along each transfer axis, a post-interpolation tool path which is the tool path after being interpolated by the tool path interpolation unit, and a post-interpolation second transfer axis path which is the second transfer axis path after being locally interpolated by the second transfer axis path interpolation unit; a pulse interpolation unit which obtains a position coordinate on each of the transfer axes at each time point at every unit time of the reference time, the position coordinate corresponding to a position coordinate of the post-interpolation tool path in the workpiece coordinate system at each time point, and a transfer amount of the transfer object per unit time for each transfer axis from the obtained position coordinate on each transfer axis at each time point, and which sets the obtained transfer amount per unit time as the command pulse per the specific period; and a control unit which outputs, to each transfer device, the command pulse for the transfer axis corresponding to that transfer device among the command pulses per the specific period for the respective transfer axes obtained by the pulse interpolation unit, and which causes each transfer device to move the transfer object in accordance with the command pulse outputted to each transfer device: wherein the pulse interpolation unit obtains the intervening variable at each time point at every unit time of the reference time based on the intervening variable time function obtained by the intervening variable time function derivation unit; the pulse interpolation unit obtains a position coordinate of the post-interpolation tool path in the workpiece coordinate system and a position coordinate of the post-interpolation second transfer axis path on the second transfer axis, the position coordinate of the post-interpolation tool path corresponding to the obtained intervening variable at each time point, the position coordinate of the post-interpolation second transfer axis path corresponding to the intervening variable at each time point; and the pulse interpolation unit obtains a position coordinate on each transfer axis corresponding to the position coordinate of the post-interpolation tool path in the workpiece coordinate system at each time point based on a specific relational expression using the obtained position coordinate on the second transfer axis as a constraint and representing a correlation between a position coordinate of the tool in the workpiece coordinate system and a position coordinate on each transfer axis.

With this numerical control device, since a second transfer axis path obtained from a machining program is interpolated and a position coordinate on the second transfer axis indicated by the second transfer axis path after interpolation is used as a constraint to obtain a position coordinate on each transfer axis corresponding to a position coordinate at each time point of a post-interpolation tool path, even if the first transfer axis and the second transfer axis are indeterminate axes, a position coordinate at each of the time points on the first transfer axis and the second transfer axis corresponding to the tool path can be obtained and simultaneous control of corresponding transfer devices can be performed for all transfer axes. In addition, with this numerical control device, even when the machine tool includes the second transfer device which has a low allowable acceleration with respect to the second transfer axis or, in other words, which is slow-moving with respect to the second transfer axis, since the slow movement of the second transfer device is compensated by transfer of the transfer object along the first transfer axis by the first transfer device which has a high allowable acceleration, speedy and highly accurate machining control can be realized without being governed by the low allowable acceleration with respect to the second transfer axis of the second transfer device. Specifically, with this numerical control device, first, a second transfer axis path related to movement of the specific point on a second transfer axis with a lower allowable acceleration than an allowable acceleration of transfer of a transfer object on a first transfer axis is interpolated so that a secondary differential value with respect to an intervening variable of the second transfer axis path becomes smaller and a velocity variation of the transfer object with respect to the second transfer axis becomes gradual, and a position coordinate on each transfer axis is obtained by using, as a constraint, a position coordinate at each time point on the second transfer axis indicated by the second transfer axis path after interpolation. Therefore, while a movement of the transfer object with respect to the second transfer axis can be kept gradual so that an acceleration of the movement is within a low allowable acceleration, a rapid movement of the transfer object can be instructed on the first transfer axis as though to compensate for the gradual movement of the transfer object with respect to the second transfer object. Accordingly, with respect to the first transfer device with favorable acceleration performance, control to compensate for the poor acceleration performance of the second transfer device or, in other words, control for quickly transferring the transfer object on the first transfer axis as though to compensate for the poor acceleration performance of the second transfer device is performed. As a result, even if the acceleration performance of the second transfer device is significantly poor, machining velocity can be prevented from being affected by the significantly poor acceleration performance and the machine tool can be enabled to perform machining of the workpiece at high velocity. In addition, with this numerical control device, since a position coordinate at each time point on other transfer axes is obtained by using, as a constraint, a position coordinate at each time point on the second transfer axis of the second transfer axis path after interpolation, a position coordinate having absorbed a positional error created by interpolating the second transfer axis path is obtained as a position coordinate on the first transfer axis that includes a same coordinate axis component as the second transfer axis. Therefore, during machining of the workpiece, a positional error created by interpolation of the second transfer axis path is not reflected in a movement of the transfer object. As a result, the machine tool can be enabled to perform machining of the workpiece at high machining accuracy.

In the numerical control device, the machining program stored in the storage unit may include information on a position coordinate of a command point in the workpiece coordinate system, a tool transfer velocity command indicating a transfer velocity of the tool, and information on a position coordinate of the specific point on the second transfer axis which corresponds to the command point, the command point being a point through which the tool is to pass during machining of the workpiece, and the path derivation unit may include a tool path derivation unit which reads the machining program stored in the storage unit and which calculates the tool path based on the information on the position coordinate of the command point and the tool transfer velocity command which are included in the read machining program, and a second transfer axis path derivation unit which reads the machining program stored in the storage unit and which calculates the second transfer axis path based on the information on the position coordinate of the specific point on the second transfer axis and the tool transfer velocity command which are included in the read machining program.

With this configuration, by simply storing, in the storage unit, a machining program that includes information on a position coordinate of the specific point on the second transfer axis in addition to information on the command point and the tool transfer velocity command, since the second transfer axis path is obtained from the information on the position coordinate of the specific point on the second transfer axis and the tool transfer velocity command which are included in the machining program, a movement of the transfer object on the second transfer axis can be arbitrarily set when the machining program is being created. Therefore, when creating the machining program, a movement of the transfer object on the second transfer axis by the second transfer device with poor acceleration performance can be arbitrarily specified.

In the numerical control device, the machining program stored in the storage unit may include information on a position coordinate of a command point in the workpiece coordinate system and a tool transfer velocity command indicating a transfer velocity of the tool, the command point being a point through which the tool is to pass during machining of the workpiece, and the path derivation unit may include a tool path derivation unit which reads the machining program stored in the storage unit and which calculates the tool path based on the information on the position coordinate of the command point and the tool transfer velocity command which are included in the read machining program, and a second transfer axis path derivation unit which calculates the second transfer axis path based on a specific calculation rule from the tool path calculated by the tool path derivation unit.

With this configuration, by simply storing, in the storage unit, a machining program that includes information on the position coordinate of the command point and the tool transfer velocity command, after the tool path derivation unit calculates a tool path from the machining program, the second transfer axis path automatically calculates the second transfer axis path from the tool path. Therefore, there is no need to specify a locus of a position coordinate of the specific point on the second transfer axis in the machining program and thereby the machining program can be simplified.

As shown, according to the embodiment described above, a machine tool which has a plurality of transfer axes that are indeterminate with respect to a position coordinate indicated by a tool path and in which an acceleration performance of a transfer object with respect to any of the indeterminate transfer axes is significantly poor can be enabled to perform machining of workpieces at high velocity and with high machining accuracy while performing simultaneous control of transfer devices for all transfer axes.

## Claims

1. A numerical control device which is provided in a machine tool including a plurality of transfer devices which move a transfer object which is a workpiece or a tool for machining the workpiece along a plurality of transfer axes in order to machine the workpiece, the plurality of transfer axes including a first transfer axis and a second transfer axis which respectively include a specific coordinate axis component in a workpiece coordinate system set on the workpiece and which are indeterminate axes whose coordinates are not uniquely determined with respect to a coordinate on the specific coordinate axis, the plurality of transfer devices including a first transfer device which moves the transfer object along the first transfer axis and a second transfer device which moves the transfer object along the second transfer axis, an allowable acceleration of transfer of the transfer object along the second transfer axis by the second transfer device being lower than an allowable acceleration of transfer of the transfer object along the first transfer axis by the first transfer device, and the numerical control device numerically controlling the respective transfer devices by outputting a command pulse per specific period to the respective transfer devices, the numerical control device comprising:

   a storage unit which stores a machining program which instructs machining of the workpiece;
   a path derivation unit which reads the machining program stored in the storage unit, and which obtains a tool path and a second transfer axis path based on the machining program which has been read, the tool path including a function which expresses a movement of the tool during machining of the workpiece by a position coordinate of the tool in the workpiece coordinate system and an intervening variable which is an integrated length of a locus of the movement of the tool, the second transfer axis path expressing a movement of a specific point on the second transfer axis as a function of a position coordinate of the specific point on the second transfer axis and the intervening variable, the specific point being to be used as a reference when the second transfer device moves the transfer object during machining of the workpiece;
   a tool path interpolation unit which interpolates the tool path obtained by the path derivation unit so that a movement of the tool expressed by the tool path becomes smooth;
   a second transfer axis path interpolation unit which performs smooth interpolation and local interpolation, the smooth interpolation being an interpolation in which the second transfer axis path obtained by the path derivation unit is interpolated so that a movement of the specific point on the second transfer axis becomes smooth, the movement of the specific point being expressed by the second transfer axis path, the local interpolation being an interpolation in which the second transfer axis path after the smooth interpolation is interpolated so that a secondary differential value with respect to the intervening variable of the second transfer axis path after smooth interpolation becomes smaller;
   an intervening variable time function derivation unit which obtains an intervening variable time function expressing a variation in the intervening variable with respect to a lapse of a reference time, based on an acceleration/deceleration condition including an allowable acceleration of transfer of the transfer object for each transfer axis when the transfer object is moved along each transfer axis, a post-interpolation tool path which is the tool path after being interpolated by the tool path interpolation unit, and a post-interpolation second transfer axis path which is the second transfer axis path after being locally interpolated by the second transfer axis path interpolation unit;
   a pulse interpolation unit which obtains a position coordinate on each of the transfer axes at each time point at every unit time of the reference time, the position coordinate corresponding to a position coordinate of the post-interpolation tool path in the workpiece coordinate system at each time point, and a transfer amount of the transfer object per unit time for each transfer axis from the obtained position coordinate on each transfer axis at each time point, and which sets the obtained transfer amount per unit time as the command pulse per the specific period; and

a control unit which outputs, to each transfer device, the command pulse for the transfer axis corresponding to that transfer device among the command pulses per the specific period for the respective transfer axes obtained by the pulse interpolation unit, and which causes each transfer device to move the transfer object in accordance with the command pulse outputted to each transfer device, wherein:

the pulse interpolation unit obtains the intervening variable at each time point at every unit time of the reference time based on the intervening variable time function obtained by the intervening variable time function derivation unit; the pulse interpolation unit obtains a position coordinate of the post-interpolation tool path in the workpiece coordinate system and a position coordinate of the post-interpolation second transfer axis path on the second transfer axis, the position coordinate of the post-interpolation tool path corresponding to the obtained intervening variable at each time point, the position coordinate of the post-interpolation second transfer axis path corresponding to the intervening variable at each time point; and the pulse interpolation unit obtains a position coordinate on each transfer axis corresponding to the position coordinate of the post-interpolation tool path in the workpiece coordinate system at each time point based on a specific relational expression using the obtained position coordinate on the second transfer axis as a constraint and representing a correlation between a position coordinate of the tool in the workpiece coordinate system and a position coordinate on each transfer axis.

2. The numerical control device according to claim 1, wherein
the machining program stored in the storage unit includes information on a position coordinate of a command point in the workpiece coordinate system, a tool transfer velocity command indicating a transfer velocity of the tool, and information on a position coordinate of the specific point on the second transfer axis which corresponds to the command point, the command point being a point through which the tool is to pass during machining of the workpiece, and

the path derivation unit includes a tool path derivation unit which reads the machining program stored in the storage unit and which calculates the tool path based on the information on the position coordinate of the command point and the tool transfer velocity command which are included in the read machining program, and a second transfer axis path derivation unit which reads the machining program stored in the storage unit and which calculates the second transfer axis path based on the information on the position coordinate of the specific point on the second transfer axis and the tool transfer velocity command which are included in the read machining program.

3. The numerical control device according to claim 1, wherein
the machining program stored in the storage unit includes information on a position coordinate of a command point in the workpiece coordinate system and a tool transfer velocity command indicating a transfer velocity of the tool, the command point being a point through which the tool is to pass during machining of the workpiece, and
the path derivation unit includes a tool path derivation unit which reads the machining program stored in the storage unit and which calculates the tool path based on the information on the position coordinate of the command point and the tool transfer velocity command which are included in the read machining program, and a second transfer axis path derivation unit which calculates the second transfer axis path based on a specific calculation rule from the tool path calculated by the tool path derivation unit.

# FIG. 1

EP 2 738 633 A1

# FIG.2

**NUMERICAL CONTROL DEVICE** _4

**STORAGE UNIT**

**OPERATION PROCESSING UNIT** _6

**PATH DERIVATION UNIT** _12

32 — **TOOL PATH DERIVATION UNIT** | 34 — **TRANSFER AXIS PATH DERIVATION UNIT**

**PATH INTERPOLATION UNIT** _14

15 — **TOOL PATH INTERPOLATION UNIT** | 16 — **TRANSFER AXIS PATH INTERPOLATION UNIT**

15a — TOOL PATH SMOOTH INTERPOLATION UNIT

16a — TRANSFER AXIS PATH SMOOTH INTERPOLATION UNIT

15b — TOOL PATH LOCAL FILTER

16b — TRANSFER AXIS PATH LOCAL FILTER

15c — TOOL PATH LOCAL INTERPOLATION UNIT

16c — TRANSFER AXIS PATH LOCAL INTERPOLATION UNIT

15d — TOOL PATH ERROR CORRECTION UNIT

16d — TRANSFER AXIS PATH ERROR CORRECTION UNIT

**INTERVENING VARIABLE TIME FUNCTION DERIVATION UNIT** _18

**MEMORY** _5

**PULSE INTERPOLATION UNIT** _22

**CONTROL UNIT** _24

102c (102) — **TABLE TRANSFER UNIT**

110b (110) — **SWINGING SUPPORT TRANSFER UNIT**

112b (112) — **ROTATING SUPPORT TRANSFER UNIT**

114b (114) — **RAM TRANSFER UNIT**

116b (116) — **SADDLE TRANSFER UNIT**

118b (118) — **CROSS RAIL TRANSFER UNIT**

_2

# FIG. 3

```
            ( START )
                │
                ▼              ╭─ S1
┌───────────────────────────────┐
│    READ MACHINING PROGRAM     │
└───────────────────────────────┘
                │
                ▼              ╭─ S2
┌───────────────────────────────┐
│         DERIVE PATH           │
└───────────────────────────────┘
                │
                ▼              ╭─ S3
┌───────────────────────────────┐
│ PERFORM BLOCK SMOOTH INTERPOLATION │
└───────────────────────────────┘
                │
                ▼              ╭─ S4
┌───────────────────────────────┐
│   PERFORM LOCAL INTERPOLATION │
└───────────────────────────────┘
                │
                ▼              ╭─ S5
┌───────────────────────────────┐
│   DERIVE INTERVENING VARIABLE │
│        TIME FUNCTION          │
└───────────────────────────────┘
                │
                ▼              ╭─ S6
┌───────────────────────────────┐
│     DERIVE REFERENCE TIME,    │
│  PERFORM PULSE INTERPOLATION, │
│      AND OUTPUT PULSE         │
└───────────────────────────────┘
                │
                ▼
            (  END  )
```

# FIG.4

(START)

IS THERE INTERPOLATION OBJECT POINT FOR WHICH INTERPOLATION INTERVAL WIDTH HAS NOT BEEN CALCULATED ? — S12 — NO →

↓YES

CALCULATE DISTRIBUTED INTERVAL WIDTH AND INTERPOLATION INTERVAL WIDTH — S14

↓

DO INTERPOLATION INTERVALS OVERLAP ? — S16 — NO →

↓YES

COUPLE OVERLAPPING INTERPOLATION INTERVALS — S18

EXTRACT INTERPOLATION INTERVAL — S20

↓

DERIVE ADJUSTMENT INTERVAL — S22

↓

INITIALLY SET POST-INTERPOLATION INTEGRATED FUNCTION — S24

↓

EXTRACT INTERPOLATION BLOCK — S26

↓

CALCULATE POST-INTERPOLATION FUNCTION — S28

↓

ADD POST-INTERPOLATION FUNCTION TO POST-INTERPOLATION INTEGRATED FUNCTION — S30

↓

INTERPOLATION PROCESSING OF ALL INTERPOLATION BLOCKS COMPLETED ? — S32 — NO

↓YES

DERIVE ERROR-HAVING INTERPOLATION PATH — S34

↓

DERIVE ERROR CORRECTION PATH — S36

↓

CORRECT ERROR-HAVING INTERPOLATION PATH, AND SET CORRECTED INTERPOLATION PATH AS INTERPOLATION INTERVAL OF POST-LOCAL INTERPOLATION PATH — S38

↓

LOCAL INTERPOLATION PROCESSING OF ALL INTERPOLATION INTERVALS COMPLETED ? — S40 — NO

↓YES

(END)

# FIG. 5

```
                    ( START )
                        │
                        ▼                    ╭─S52
        ┌───────────────────────────────────┐
        │          INITIALLY SET T          │
        └───────────────────────────────────┘
                        │
                        ▼                    ╭─S54
        ┌───────────────────────────────────┐
        │    DERIVE POSITION ON EACH PATH    │
        │   CORRESPONDING TO INITIALLY SET T │
        └───────────────────────────────────┘
                        │
                        ▼                    ╭─S56
        ┌───────────────────────────────────┐
        │      DERIVE POSITION COORDINATE    │
        │   new p[ ] FOR EACH TRANSFER AXIS  │
        └───────────────────────────────────┘
                        │
                        ▼                    ╭─S58
        ┌───────────────────────────────────┐
        │          old p[ ]=new p[ ]         │
        └───────────────────────────────────┘
                        │
                        ▼                    ╭─S60
        ┌───────────────────────────────────┐
        │      DERIVE NEW T BY ADDITION OF dT │
        └───────────────────────────────────┘
                        │
                        ▼                    ╭─S62
        ┌───────────────────────────────────┐
        │    DERIVE POSITION ON EACH PATH    │
        │        CORRESPONDING TO NEW T      │
        └───────────────────────────────────┘
                        │
                        ▼                    ╭─S64
        ┌───────────────────────────────────┐
        │      DERIVE POSITION COORDINATE    │
        │   new p[ ] FOR EACH TRANSFER AXIS  │
        └───────────────────────────────────┘
                        │
                        ▼                    ╭─S66
        ┌───────────────────────────────────┐
        │        CALCULATE COMMAND PULSE     │
        └───────────────────────────────────┘
                        │
                        ▼                    ╭─S68
        ┌───────────────────────────────────┐
        │         OUTPUT COMMAND PULSE       │
        └───────────────────────────────────┘
                        │
                        ▼                    ╭─S70
   NO          ╱─────────────────╲
   ◄───────────   SHUTDOWN?
               ╲─────────────────╱
                      YES │
                          ▼
                      ( END )
```

# FIG. 6

# FIG. 7

# FIG. 8

ADJUSTMENT INTERVAL

SINGLE COUPLED
INTERPOLATION INTERVAL

a | | a

t[3]

t[1] t[2]                    t[5]
                     w3(s)        w5(s) t[7]  t[8]
t[0]                                    t[6]
                w2(s)                    w4(s)  w6(s)  w7(s)
        w0(s)  w1(s)         t[4]

INTERPOLATION
INTERVAL OF t[2]

INTERPOLATION
INTERVAL OF t[3]

INTERPOLATION
INTERVAL OF t[4]

INTERPOLATION
INTERVAL OF t[5]

INTERPOLATION
INTERVAL OF t[6]

# FIG. 9

INTERVAL CORRESPONDING
TO INTERPOLATION BLOCK

t[i]+a              t[i+1]−a                    t[i+1]+a
t[i]−a    t[i]              $w_i{}'(s)$            t[i+1]

A=2a                              A=2a                    s

# FIG. 10

INTERVAL CORRESPONDING
TO INTERPOLATION BLOCK

t[i]−a     t[i]    t[i+1]−a   t[i]+a    t[i+1]     t[i+1]+a

wi'(s)

A=2a

A=2a

s

# FIG. 11

INTERVAL CORRESPONDING
TO INTERPOLATION BLOCK

t[i]−a    t[i+1]−a    t[i]+a    t[i+1]+a

t[i]    t[i+1]

wi'(s)

A=2a

A=2a

s

# FIG. 12

ds/dT

ACCELERATION/DECELERATION CURVE

STEPPED VELOCITY CURVE
(INTERVENING VARIABLE VELOCITY
UPPER LIMIT FUNCTION)

T

ACCELERATION REGION　　DECELERATION REGION

# FIG. 13

(s2,f2,t2,a2)

ts4

TARGET POINT

ts3

ts2

FINAL POINT

ts1

(s1,f1,t1,a1)

# FIG. 14

(s2,f2,t2,a2)

FINAL POINT

ts5

ts6

ts7

TARGET POINT

(s1,f1,t1,a1)

# FIG. 15

(s2,f2,t2,a2)

FINAL POINT

ts8

ts9

TARGET POINT

(s1,f1,t1,a1)

## FIG. 16

(s2,f2,t2,a2)

ts12

TARGET POINT

ts11

FINAL POINT

ts10

(s1,f1,t1,a1)

## FIG. 17

(s2,f2)

TARGET POINT

FINAL POINT

ts13

(s1,f1,t1,a1)

## FIG. 18

(s2,f2,....)

TARGET POINT

FINAL POINT

(s1,f1,t1,a1)

## FIG. 19

FINAL POINT

(s2,f2)

(s1,f1,t1,a1)

TARGET POINT

FIG. 20

# FIG.21

## INTERNATIONAL SEARCH REPORT

| International application No. |
| --- |
| PCT/JP2012/004801 |

A. CLASSIFICATION OF SUBJECT MATTER
*G05B19/4103*(2006.01)i, *G05B19/18*(2006.01)i

According to International Patent Classification (IPC) or to both national classification and IPC

B. FIELDS SEARCHED

Minimum documentation searched (classification system followed by classification symbols)
G05B19/18-19/46, B23Q15/00-15/28

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | WO 2010/032284 A1 (Shin Nippon Koki Co., Ltd.), 25 March 2010 (25.03.2010), entire text; all drawings & EP 2336839 A1 | 1-3 |
| A | JP 2010-182157 A (Shin Nippon Koki Co., Ltd.), 19 August 2010 (19.08.2010), entire text; all drawings (Family: none) | 1-3 |
| A | JP 2008-225825 A (Shin Nippon Koki Co., Ltd.), 25 September 2008 (25.09.2008), entire text; all drawings (Family: none) | 1-3 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 15 October, 2012 (15.10.12) | Date of mailing of the international search report 23 October, 2012 (23.10.12) |
| --- | --- |
| Name and mailing address of the ISA/ Japanese Patent Office | Authorized officer |
| Facsimile No. | Telephone No. |

Form PCT/ISA/210 (second sheet) (July 2009)

**REFERENCES CITED IN THE DESCRIPTION**

**Patent documents cited in the description**

- JP 2008225825 A